# EUROPÄISCHE PATENTSCHRIFT

(11) **EP 2 222 751 B1**
(45) Veröffentlichungstag und Bekanntmachung des Hinweises auf die Patenterteilung: **06.07.2011**
(21) Anmeldenummer: 08851875.8
(22) Anmeldetag: 21.11.2008
(51) Int. Cl.: C08G 65/00

(54) **HÄRTBARE ZUSAMMENSETZUNGEN AUS SILANEN MIT DREI HYDROLISIERBAREN GRUPPEN**
CURABLE COMPOSITIONS CONSISTING OF SILANES WITH THREE HYDROLYSABLE GROUPS
COMPOSITIONS DURCISSABLES À BASE DE SILANES AVEC TROIS GROUPES HYDROLYSABLES

(30) Priorität: 22.11.2007 DE 102007056524
(43) Veröffentlichungstag der Anmeldung: 01.09.2010
(73) Patentinhaber: Henkel AG & Co. KGaA, 40589 Düsseldorf (DE)
(72) Erfinder: NEUHAUSEN, Ulrich, 40545 Düsseldorf (DE); BRAUN, Daniela, Shanghai 201203 (CN); KLEIN, Johann, 40593 Düsseldorf (DE); KUNZE, Christiane, 51061 Köln (DE); GONZALEZ, Sara, Barcelona (ES); ZANDER, Lars, 41569 Rommerskirchen (DE); BACHON, Thomas, 40597 Düsseldorf (DE)
(86) Internationale Anmeldenummer: PCT/EP2008/066038
(87) Internationale Veröffentlichungsnummer: WO 2009/065950

(56) Entgegenhaltungen:
- EP-A- 0 354 472
- EP-A- 0 931 800
- WO-A-02/068501
- WO-A-03/059981

## Beschreibung

Die vorliegende Erfindung betrifft silanvernetzende, härtbare Zusammensetzungen, deren Herstellung und Verwendung in Kleb- und Dichtstoffen.

Polymersysteme, die über reaktive Alkoxysilylgruppen verfügen, sind bekannt. In Gegenwart von Luftfeuchtigkeit sind diese alkoxysilanterminierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder hochvemetzte Systeme (Duroplaste).

Die Polymere weisen in der Regel ein organisches Grundgerüst auf, das an den Enden Alkoxysilylgruppen trägt. Bei dem organischen Grundgerüst kann es sich beispielsweise um Polyurethane, Polyester, Polyether etc. handeln.

Zum elastischen Kleben werden Klebstoffe benötigt, die einerseits große Festigkeiten aufweisen, aber andererseits auch ausreichend elastisch sind, um dauerhaft den Klebeverbund aufrechterhalten zu können. Wird die Festigkeit des Klebstoffs erhöht, so kommt es meist zu einer Abnahme der elastischen Eigenschaften. Dabei wird eine höhere Festigkeit meist durch Erhöhung der Vernetzungsdichte erreicht, mit der gleichzeitig eine Abnahme der Elastizität einhergeht. Diese kann zum Teil durch Zugabe von Weichmacher wieder hergestellt werden. Allerdings fördern größere Anteile die Abwanderung bzw. Migration des Weichmachers und beeinträchtigen schließlich die Festigkeit des Klebeverbunds, was im allgemeinen unerwünscht ist.

Die gemäß dem Stand der Technik in der Praxis verwendeten alkoxysilanterminierten Polymere enthalten in der Regel γ-Aikoxysilylgruppen, d.h. Alkoxysilylgruppen, die über eine Propylengruppe und eine Bindegruppe mit einem Gerüstpolymer verbunden sind. Diese Bindemittel werden häufig als Ersatz für NCO-terminierte Polyurethane eingesetzt und weisen deutliche toxikologische Vorteile für den Verarbeiter auf, da sie keine Isocyanate enthalten.

Eine jüngere Entwicklung sind Bindemittel, die über sogenannte Dimethoxyverbindungen auf Basis von α-Silanen aushärten. Darunter werden solche alkoxysilanterminierten Polymere zusammengefasst, die zwischen einer das Polymer mit der Silylfunktion verknüpfenden Bindegruppe und der Dimethoxyalkylsilylgruppe eine Methyleneinheit aufweisen. Diese Systeme weisen in der Regel gute Elastizitäten auf, haben allerdings sehr kurze Verarbeitungszeiten. Beispielsweise beschreibt die EP 1 363 960 B1 schnell härtende isocyanatfreie schäumbare Mischungen mit α-isocyanatosilanterminierten Prepolymeren, die eine hohe Härtungsgeschwindigkeit haben.

Die EP 1 396 513 B1 betrifft Mischsysteme basierend auf Polyoxyalkylenprepolymeren, die an einem Ende Trialkoxysilyl- und am anderen Mono- oder Dialkoxysilylgruppen aufweisen. Ferner werden Mischungen aus zwei Polyoxyalkylenprepolymeren beschrieben, wobei das eine Trialkoxysilylgruppen und das andere Di- oder Monoalkoxysilylgruppen aufweist. Diese werden durch eine Hydrosilylierung hergestellt, die lange Reaktionszeiten erforderlich macht und in Bezug auf die Endgruppen der Prepolymere nicht vollständig abläuft, so dass so hergestellte Systeme eine als nachteilig empfundene Restklebrigkeit aufweisen.

Es besteht also weiterhin das Bedürfnis nach isocyanatfreien Zusammensetzungen zur Herstellung von 1 K- oder 2K-Schäumen, Kleb- und Dichtstoffen, die eine akzeptable Härtungszeit und nach Aushärtung eine besonders gute Elastizität und Dehnbarkeit aufweisen. Ferner besteht der Wunsch, nach einer effizienten Syntheseroute und nach Zusammensetzungen, die keine Restklebrigkeit aufweisen.

Aufgabe der vorliegenden Erfindung ist daher, isocyanatfreie vernetzbare Zusammensetzungen bereitzustellen, die eine hohe Elastizität und eine gute Festigkeit aufweisen. Ferner ist eine anwenderfreundliche Härtungszeit erwünscht.

Überraschenderweise wurde gefunden, dass silanvernetzende Zusammensetzungen eine besonders hohe Dehnbarkeit, Elastizität und gute Haltbarkeit (Festigkeit) des Klebeverbunds bei angemessenen Abbindezeiten aufweisen, wenn diese aus Polymeren mit zwei verschiedenen Trialkoxysilylendgruppen bzw. mit zwei unterschiedlichen Silylgruppen, die je drei hydrolisierbare Gruppen enthalten, zusammengesetzt sind, wobei sich die Silylgruppen im wesentlichen in den aliphatischen Kohlenwasserstoffbrücken zwischen den Silylgruppen und den Bindegruppen zum Polymergerüst unterscheiden.

Gegenstand der Erfindung ist eine härtbare Zusammensetzung, umfassend
a) ein Polymer P mit mindestens zwei Endgruppen der folgenden Formeln (1) und (II)

   -Aₘ-K¹-SiXYZ (I),

   -Aₘ-K²-SiXYZ (II),

   und / oder
b) zwei Polymere P₁ und P₂ die ein Polymergerüst mit mindestens zwei Endgruppen (I) und/oder (II) aufweisen, wobei das Polymer P₁ Endgruppen der folgenden Formel (I)

   -Aₘ-K¹-SiXYZ (I),

   und das Polymer P₂ Endgruppen der folgenden Formel (II)

   -Aₘ-K²-SiXYZ (II),
aufweist, wobei
A eine bivalente Bindegruppe bedeutet,
K¹, K² unabhängig voneinander für eine bivalente aliphatische Kohlenwasserstoffgruppe steht, die eine Hauptkette von 1 bis 6 Kohlenstoffatomen aufweist, wobei die Kohlenwasserstoffgruppen K¹, K² verschieden sind,
X, Y, Z unabhängig voneinander für eine Hydroxygruppe oder eine hydrolisierbare Gruppe stehen, und
m die Werte 0 oder 1 annimmt,
die dadurch gekennzeichnet ist, dass die bivalente Bindegruppe A eine Amid-, Carbamat-, Harnstoff-, Imino-, Carboxy-, Carbonat-, Thio-, Mercapto- oder Sulfanatgruppe oder ein Sauerstoff- oder Stickstoffatom, insbesondere eine Urethangruppe bedeutet.

Die erfindungsgemäßen, härtbaren Zusammensetzungen weisen besonders vorteilhafte Eigenschaften auf, insbesondere eine hohe Elastizität, gute Dehnbarkeit und Festigkeit, wie sie bisher von ähnlichen bekannten isocyanatfreien Bindemittel nicht erreicht werden, bei gleichzeitig moderaten Härtungszeiten, die eine gute Verarbeitbarkeit erlauben.

Unter einer härtbaren Zusammensetzung versteht man einen Stoff oder eine Mischung aus mehreren Stoffen, die durch physikalische oder chemische Maßnahmen härtbar ist. Dabei können diese chemischen oder physikalischen Maßnahmen beispielsweise in der Zuführung von Energie in Form von Wärme, Licht oder sonstiger elektromagnetischer Strahlung, aber auch durch einfaches in Kontaktbringen mit Luftfeuchtigkeit, Wasser oder einer reaktiven Komponente bestehen.

Die Polymere P, P₁, P₂ weisen ein Polymergerüst mit mindestens zwei Endgruppen (I) und/oder (II) auf. Jede Endgruppe (I), (II) umfasst eine bivalente Bindegruppe. Dabei versteht man unter einer bivalenten Bindegruppe A eine zweibindige chemische Gruppe, die das Polymergerüst der Polymere P, P₁, P₂ mit der Kohlenwasserstoffgruppe K¹, K² der Endgruppen (I), (II) verknüpft.

Die bivalente Bindegruppe A kann auch bei der Herstellung der Polymere P, P₁, P₂ ausgebildet werden, z.B. als Urethangruppe durch die Reaktion eines mit Hydroxygruppen funktionalisierten Polyethers mit einem Isocyanatodialkoxysilan. Dabei kann die bivalente Bindegruppe von im zugrunde gelegten Polymergerüst auftretenden Strukturmerkmalen sowohl unterscheidbar, als auch nicht unterscheidbar sein. Letzteres liegt beispielsweise vor, wenn sie mit den Verknüpfungspunkten der Wiederholungseinheiten des Polymergerüsts identisch ist.

In Fällen, in denen die bivalente Bindegruppe A von ggf. vorhandenen funktionellen Gruppen der Polymerstruktur von P, P₁ bzw. P₂ unterscheidbar ist, entspricht m dem Wert 1. Wenn sich die bivalente Bindegruppe A von den funktionellen Gruppen der Polymerstruktur nicht unterscheidet, entspricht m dem Wert 0.

K¹, K² sind bivalente aliphatische Kohlenwasserstoffgruppen. Darunter versteht man eine geradkettige oder verzweigte, gesättigte oder ungesättigte Alkylengruppe mit einer Hauptkette von 1 bis 6 Kohlenstoffatomen, bevorzugt Methylen, Ethylen oder Propylen. Wenn K¹ und/oder K² verzweigt vorliegt, ist die Hauptkette bevorzugt nur an einem der Kohlenstoffatome verzweigt. K¹ und K² sind unterschiedlich.

Nach einer bevorzugten Ausführungsform der erfindungsgemäßen Zusammensetzung weist K² eine um mindestens ein Kohlenstoffatom längere Hauptkette auf als K¹. Aliphatische Kohlenstoffketten, insbesondere mit Einfachbindungen, besitzen eine sehr bewegliche Struktur, die zu den elastischen Eigenschaften der erfindungsgemäßen Zusammensetzungen beiträgt. Gerade an den reaktiven Enden der silanvernetzenden Polymere ist es besonders vorteilhaft, Polymere mit verschiedenen Endgruppen einzusetzen, die sich außerdem in der Länge der Kohlenstoffkette entlang der Hauptkette im Rest K¹, K² unterscheiden. Auf diese Weise kann man die Härtungsgeschwindigkeit und die Dehnbarkeit der Zusammensetzung in weitem Maße variieren.

Nach einer weiteren bevorzugten Ausführungsform der erfindungsgemäßen Zusammensetzung steht K¹ für-CH₂-.

Solche Verbindungen weisen eine hohe Reaktivität der abschließenden Silylgruppen auf, was zur Verkürzung der Abbinde- und Härtungszeiten beiträgt.

Nach einer weiteren bevorzugten Ausführungsform der erfindungsgemäßen Zusammensetzung steht K² für-(CH₂)₃-.

Wird für K² eine Propylengruppe gewählt, so weisen diese Verbindungen eine besonders hohe Flexibilität auf. Diese Eigenschaft wird der längeren verbindenden Kohlenstoffkette zwischen bivalenter Bindegruppe A und abschließender Silylgruppe zugeschrieben, da Methylengruppen allgemein flexibel und beweglich sind.

Bevorzugt steht K¹ für Methylen- und K² für Propylengruppen. So können erfindungsgemäße Zusammensetzungen bereitgestellt werden, die ein gewünscht ausgewogenes Verhältnis von guter Reaktivität, also Vernetzungsgeschwindigkeit und angemessener Verarbeitungszeit bieten und als Klebeverbund hochelastisch, flexibel aber dennoch beständig sind.

Besonders bevorzugt sind erfindungsgemäße Zusammensetzungen, bei denen K¹ für eine Methylen- und K² für eine Propylengruppe steht und diese als Bestandteile der Endgruppen (I) und (II) am gleichen Polymer P vorliegen. Solche Polymere sind hochelastisch und -dehnbar und weisen außerdem gute Festigkeiten, niedrige Module und angemessene Abbinde- und Härtungszeiten auf.

Ganz besonders bevorzugt sind erfindungsgemäße Zusammensetzungen, die insgesamt mindestens drei verschieden funktionalisierte Polymere enthalten, nämlich ein Polymer P, das zwei unterschiedliche Endgruppen (I) und (II) aufweist, ein weiteres Polymer P₁, das Endgruppen (I) und ein drittes Polymer P₂, das Endgruppen (II) aufweist.

Solche Zusammensetzungen weisen eine noch höhere Elastizität und gleichzeitig eine akzeptable Festigkeit auf. Die mit einer solchen Zusammensetzung erzielbaren Werte für die Elastizität und die Reißfestigkeit sind deutlich höher als für Mischungen aus den Einzelkomponenten P₁ und P₂.

Nach einer weiteren bevorzugten Ausführungsform der erfindungsgemäßen Zusammensetzung steht X, Y und Z jeweils für eine hydrolisierbare Gruppe ausgewählt aus -Cl, -O-C(=O)R¹, -OR¹, wobei R¹ für einen Kohlenwasserstoffrest mit 1 bis 20 C-Atomen steht.

Bevorzugt werden als X beziehungsweise Y Alkoxygruppen, also -OR¹, gewählt. Dies ist besonders vorteilhaft, da bei der Aushärtung solcher Zusammensetzungen keine die Schleimhäute reizenden Stoffe freigesetzt werden. Die dabei gebildeten Alkohole sind in den freigesetzten Mengen unbedenklich und verdunsten. Daher eignen sich solche Zusammensetzungen insbesondere für den Heimwerkerbereich. X und Y können für gleiche oder verschiedene funktionelle Gruppen stehen.

Nach einer weiteren bevorzugten Ausführungsform steht R¹ für-CH3 oder-C₂H₅. Verbindungen mit Alkoxysilylgruppen weisen je nach Natur der Reste R¹ unterschiedliche Reaktivitäten bei chemischen Reaktionen auf. Dabei weist innerhalb der Alkoxygruppen die Methoxygruppe die größte Reaktivität auf, höhere aliphatische Reste wie Ethoxy und verzweigte oder zyklische Reste wie Cyklohexyl bewirken eine deutlich geringe Reaktivität der abschließenden Alkoxysilylgruppe.

Stark elektronegative Gruppen wie beispielsweise eine Chlorid- oder Acyloxygruppe verleihen der abschließenden Silylgruppe zwar eine höhere Reaktivität als weniger elektronegative Gruppen wie z.B. Alkoxygruppen, setzen aber bei der Aushärtung reizende und als unangenehm empfundene Stoffe frei. Bei Anwendungen, wo die Freisetzung derartiger Stoffe akzeptabel ist, lassen sich so mit Hilfe von Chlorid- oder Acyloxygruppen schnell härtende Systeme herstellen. Auch kann mit Hilfe dieser Substituenten die Reaktionsgeschwindigkeit von Polymeren mit längeren Kohlenwasserstoffketten bei K¹ oder K² erhöht werden. Auf diese Weise lässt sich die Elastizität und Reaktionsgeschwindigkeit der Verbindungen streuen.

Vorteilhaft können ferner X, Y und Z so gewählt werden, dass die Reste X, Y und Z an der gleichen Alkoxysilylgruppe unterschiedlich sind. Bevorzugt wird für X Methoxy und für Y Ethoxy gewählt, Z kann dann Methoxy oder Ethoxy sein. Durch diese Auswahl kann man besonders feinstufig die gewünschte Reaktivität der abschließenden Silylgruppen einstellen, falls die reinen Methoxygruppen tragenden Silylgruppen als zu reaktiv und die Ethoxygruppen tragenden Silylgruppen für den Einsatzzweck als zu träge empfunden werden.

Nach einer weiteren bevorzugten Ausführungsform der erfindungsgemäßen Zusammensetzung sind X, Y und Z gleich. Dadurch unterscheiden sich die Endgruppen (I) und (II) nur in der Gestalt der bivalenten Kohlenwasserstoffgruppe K¹ bzw. K², so dass sich die Synthese der Polymeren P, P₁, P₂ vereinfacht. Außerdem können solche erfindungsgemäßen Zusammensetzungen zu homogeneren Produkten verarbeitet werden.

In den erfindungsgemäßen Zusammensetzungen bedeutet die bivalente Bindegruppe A eine Amid-, Carbamat-, Harnstoff-, Imino-, Carboxy-, Carbonat-, Thio-, Mercapto- oder Sulfonatgruppe oder ein Sauerstoff- oder Stickstoffatom, besonders bevorzugt eine Urethangruppe.

Diese bivalenten Bindegruppen können z.B. bei der Herstellung der Polymere P,P₁, P₂ durch Umsetzung eine Gerüstpolymers mit reaktiven Verbindungen, die die Endgruppen (I), (II) tragen, gebildet werden. Dabei weisen die erfindungsgemäßen Zusammensetzungen als bivalente Bindegruppen bevorzugt Urethangruppen auf, da bei der Herstellung der erfindungsgemäßen Zusammensetzung vorzugsweise ein Polymergerüst mit terminalen Hydroxygruppen und als reaktive Endgruppen tragende Verbindungen Isocyanatosilane bzw. isocyanatofunktionelle Alkoxysilane eingesetzt werden.

Nach einer weiteren bevorzugten Ausführungsform der erfindungsgemäßen Zusammensetzung weisen die Polymere P, P₁, P₂ jeweils ein Polymergerüst auf, das jeweils ausgewählt ist aus Alkydharzen, (Meth-)acrylaten und (Meth-)acrylamiden sowie deren Salzen, Phenolharzen, Polyalkylenen, Polyamiden, Polycarbonaten, Polyolen, Polyethern, Polyestern, Polyurethanen, Vinylpolymeren, Siloxanen sowie Copolymeren bestehend aus mindestens zwei der vorgenannten Polymerklassen.

Besonders bevorzugt werden Polyole, Polyester und Polyurethane, insbesondere Polyethylenoxid und/oder Polypropylenoxid eingesetzt.

Der Einsatz von Polyurethanen und Polyestern eröffnet vielfältige Anwendungsmöglichkeiten, weil mit beiden Polymerklassen je nach Wahl und stöchiometrischen Verhältnissen der Ausgangsstoffe sehr unterschiedliche mechanische Eigenschaften realisiert werden können. Polyester können darüber hinaus von Wasser und Bakterien zersetzt werden und sind deshalb für Anwendungen, bei denen eine biologische Abbaubarkeit wichtig ist, interessant.

Polyole, die Polyether als Polymergerüst enthalten, besitzen nicht nur an den Endgruppen, sondern auch im Polymerrückgrat eine flexible und elastische Struktur. Damit kann man Zusammensetzungen herstellen, die nochmals verbesserte elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt. Im Rahmen der vorliegenden Erfindung werden unter Verfügbarkeitsaspekten und wegen ihrer hervorragenden elastischen Eigenschaften besonders bevorzugt Polyether auf der Basis von Polyethylenoxid und / oder Polypropylenoxid eingesetzt.

Nach einer besonders bevorzugten Ausführungsform der erfindungsgemäßen Zusammensetzung weisen die Polymere P, P₁, P₂ ein Polyether oder Polyurethan Grundgerüst auf und die Bindegruppe A ist eine Urethan- oder Harnstoffgruppe.

Nach einer weiteren bevorzugten Ausführungsform der erfindungsgemäßen Zusammensetzung beträgt das Molekulargewicht Mₙ des Polymergerüsts zwischen 3000 und 50.000 g/mol. Weitere besonders bevorzugte Molekulargewichtsbereiche sind 5.000 bis 25.000 g/mol, ganz besonders bevorzugt sind 8.000 bis 19.000 g/mol, insbesondere insbesondere 12.000. bis 15.000 g/mol.

Diese Molekulargewichte sind besonders vorteilhaft, da Zusammensetzungen mit diesen Molekulargewichten Viskositäten aufweisen, die eine leichte Verarbeitbarkeit ermöglichen. Ferner weisen die Zusammensetzungen ein ausgewogenes Verhältnis von Viskosität (leichte Verarbeitbarkeit), Festigkeit und Elastizität auf. Sehr vorteilhaft ist diese Kombination in einem Molekulargewichtsbereich von 8.000 bis 18.000, insbesondere von 8.000 bis 12.000 ausgeprägt.

Ganz besonders bevorzugt werden Polyoxyalkylene, insbesondere Polyethylenoxide oder Polypropylenoxide, eingesetzt, die eine Polydispersität PD von weniger als 2, bevorzugt weniger als 1,5 aufweisen.

Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermationschromatographie (GPC, auch: SEC) bestimmt werden. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Besonders vorteilhafte viskoelastische Eigenschaften lassen sich erreichen, wenn man als polymere Grundgerüste Polyoxyalkylenpolymere, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Diese Polyoxyalkylenpolymere zeichnen sich durch eine besonders enge Molmassenverteilung, durch eine hohe mittlere Molmasse und durch eine sehr niedrige Zahl an Doppelbindungen an den Enden der Polymerketten aus.

Solche Polyoxyalkylenpolymere haben eine Polydispersität PD (M_{w}/Mₙ) von höchstens 1,7.

Besonders bevorzugte organische Grundgerüste sind beispielsweise Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14.

In einer bevorzugten Ausführungsform der Erfindung weisen diese Polyether ein mittleres Molekulargewicht (Mₙ) von etwa 5 000 bis etwa 30 000 auf, insbesondere etwa 6000 bis etwa 25 000. Besonders bevorzugt sind Polyether mit mittleren Molekulargewichten von etwa 10 000 bis etwa 22 000, insbesondere mit mittleren Molekulargewichten von etwa 12 000 bis etwa 18 000.

Es ist auch denkbar, Polymere mit einem höheren Molekulargewicht einzusetzen. Ist wegen eines beispielsweise hohen Molekulargewichts oder starker innerer Bindungskräfte die Viskosität der erfindungsgemäßen Zusammensetzung höher als gewünscht, kann man die Verarbeitungsviskosität über die Zugabe von Reaktiwerdünnern oder Weichmachern einstellen und so eine Zubereitung herstellen, die die gewünschten Eigenschaften aufweist.

Erfindungsgemäß können ebenso Mischungen mehrerer Polymere mit verschiedenen Molekulargewichten Mₙ statt reiner Polymere eingesetzt werden. In diesem Fall sind die Ausführungen zur Polydispersität und dem Molekulargewicht Mₙ so zu verstehen, dass vorteilhafterweise jedes der Mischung zugrunde gelegte Polymer eine Polydispersität im bevorzugten Bereich aufweist, die bevorzugten Molekulargewichtsbereiche sich aber auf den gemittelten Wert über die gesamte Mischung der eingesetzten Polymeren beziehen.

Ein weiterer Gegenstand der vorliegenden Erfindung ist ein Verfahren zur Herstellung einer härtbaren Zusammensetzung, bei dem man
a) ein Polymer P' mit einem Polymergerüst mit mindestens zwei terminalen funktionellen Gruppen C und
b) zwei Verbindungen mit gegenüber C reaktiven funktionellen Gruppen D der allgemeinen Formeln (III) und (IV),

   D-K¹-SiXYZ (III)

   D-K²-SiXYZ (IV),

   miteinander umsetzt,
   wobei die Stoffe (III) und (IV) bei der Umsetzung gleichzeitig oder
   zuerst Verbindung (IV) und danach Verbindung (III) in kurzem zeitlichem Abstand zu dem Polymer P' zugegeben werden,
   wobei C und D aus einer der Gruppen
   - -OH, -NHR², -NH₂, -Cl, -Br, -SH und
   - -NCO, -NCS, -C(=O)Cl, -C(=O)OR³
   ausgewählt sind, und C und D nicht derselben Gruppe angehören,
   K¹, K² unabhängig voneinander für eine bivalente aliphatische Kohlenwasserstoffgruppe steht, die eine Hauptkette von 1 bis 6 Kohlenstoffatomen aufweist, wobei die Kohlenwasserstoffgruppen K¹, K² verschieden sind,
   X, Y, Z unabhängig voneinander für eine Hydroxygruppe oder eine hydrolisierbare Gruppe stehen, und
   R², R³ jeweils unabhängig voneinander für einen Kohlenwasserstoffrest mit 1 bis 20 C-Atomen stehen.

Für die Herstellung der Polymere P' bzw. P" eignen sich prinzipiell alle Polymere, die mindestens zwei terminale funktionelle Gruppen C besitzen. Dabei werden vorzugsweise Alkydharze, Acrylate und Methacrylate, Acrylamide und Methacrylamide, Phenolharze, Polyalkylene, Polyamide, Polycarbonate, Polyole, Polyether, Polyester, Polyetherester, Polyurethane, Vinlypolymere sowie Copolymere aus mindestens zwei der vorgenannten Polymerklassen eingesetzt. Weiterhin eignen sich alle Polymere, die als Polymergerüst der Polymere P, P₁ bzw. P₂ oben beschrieben wurden.

Besonders bevorzugt werden Polyoxyalkylene, also Polyether, eingesetzt, da diese auch in ihrem Grundgerüst flexibel, aber gleichzeitig beständig sind. So werden Polyether normalerweise von Wasser und Bakterien, im Gegensatz zu beispielsweise Polyestern, nicht angegriffen oder zersetzt.

Ganz besonders bevorzugt werden Polyethylenoxid oder Polypropylenoxid, insbesondere solche, die eine Polydispersität von weniger als 2, bevorzugt weniger als 1,5 aufweisen.

Die terminalen Gruppen C können sich beispielsweise von der Wiederholungseinheit des ausgewählten Gerüstpolymers ableiten, also funktionelle Gruppen des das Polymer P', P" aufbauenden Monomers sein, durch Umfunktionalisierung von Endgruppen C des Polymergerüsts eingeführt werden, oder als weitere funktionelle Gruppen vorliegen. Dabei eignen sich als Gruppen C alle funktionellen Gruppen, die zu einer Bindungsknüpfung befähigt sind.

Als weitere Komponenten werden in den erfindungsgemäßen Verfahren zwei Verbindungen (III), (IV) eingesetzt, die über mit C reaktive Gruppen D verfügen. Dabei sind als Gruppen D alle funktionellen Gruppen vorstellbar, die mit den funktionellen Gruppen C des Polymers P' bzw. P" verknüpft werden können.

Bevorzugt werden die funktionellen Gruppen C und D jeweils aus einer der beiden folgenden Gruppen ausgewählt, wobei die funktionellen Gruppen C und D im erfindungsgemäßen Verfahren nicht aus der gleichen Gruppen entnommen werden.
- Gruppe 1: Hydroxy- (-OH); Amino- (-NH₂); sekundäre Amino- (-NHR)-; Halogengruppen, wie beispielsweise Chlorid (-Cl) oder Bromid (-Br); Sulfanyl- (-SH);
- Gruppe II: Isocyanato- (-NCO, auch: Isocyanat-), Isothiocyanato- (-NCS), Acylchloro-(-C(=O)Cl), Ester- (-C(=O)OR); Sulfonsäure- (-SO₃H) Sulfonsäurechlorid- (-SO₃Cl); ethylenisch ungesättigte Gruppen.

Dabei ist es Bestandteil des allgemeinen Fachmannwissens, eine geeignete Auswahl dahingehend zu treffen, dass die Gruppen C und D miteinander reagieren können.

So eignen sich beispielsweise zur Umsetzung mit einem Polymer P' bzw. P", dessen funktionelle Gruppen C Halogen-, Hydroxy-, Amino- oder Sulfanylgruppen sind, besonders bevorzugt Verbindungen (III), (IV) mit Gruppen D ausgewählt aus Acylchloro-, Isocyanato-, Thioisocyanato- und Estergruppen, ganz besonders bevorzugt Isocyanatogruppen.

Ebenso ist es vorstellbar, die Gruppen C aus Acylchloro-, Isocyanato-, Thioisocyanato- und Estergruppen und die Gruppen D aus Halogen-, Hydroxy-, Amino- oder Sulfanylgruppen auszuwählen.

Wenn als Gruppe D eine NCO-Gruppe ausgewählt wird, können vorzugsweise folgende Isocyanatosilane bzw. isocyanatofunktionelle Alkoxysilane eingesetzt werden: Trimethoxysilylmethylisocyanat, Triethoxysilylmethylisocyanat, Trimethoxysilylethylisocyanat, Triethoxysilylethylisocyanat, Trimethoxysilylpropylisocyanat, Triethoxysilylpropylisocyanat, Trimethoxysilylbutylisocyanat, Triethoxysilylbutylisocyanat, Trimethoxysilylpentylisocyanat, Triethoxysilylpentylisocyanat, Trimethoxysilylhexylisocyanat, Triethoxysilylhexylisocyanat.

Besonders bevorzugt werden Trimethoxysilylmethylisocyanat, Triethoxysilylmethylisocyanat, Trimethoxysilylpropylisocyanat und Trimethoxysilylpropylisocyanat.

Als Reaktionspartner für Verbindungen, bei denen als Gruppen D Isocyanatgruppen ausgewählt wurden, eignen sich besonders bevorzugt Polyole und Polyamine, insbesondere Polyethylen- und Polypropylenglykole.

Die erfindungsgemäßen Verfahren zur Herstellung der erfindungsgemäßen Zusammensetzung können in zwei Varianten durchgeführt werden.

In einem ersten Verfahren wird ein Polymer P' mit mindestens zwei terminalen funktionellen Gruppen C mit zwei Verbindungen, die gegenüber C reaktive Gruppen D aufweisen, umgesetzt. Dabei werden das Polymer P' und die zwei Verbindungen mit den allgemeinen Formeln (III) und (IV) gleichzeitig zusammengegeben, gegebenenfalls Katalysatoren, Lösungsmittel und andere Additive hinzugegeben und miteinander unter Rühren umgesetzt. Dadurch kann man die Reaktion unaufwendig in einem Eintopfverfahren durchführen und gut in großen Ansätzen fahren.

Alternativ dazu kann man ein Polymer P' und gegebenenfalls Katalysatoren, Lösungsmittel und andere Additive vorlegen und in einem ersten Schritt die Verbindung (IV), gefolgt in einem kurzen zeitlichen Abstand von der Verbindung (III) während der Umsetzung einrühren.

Dieses Vorgehensweise kann vorteilhafterweise gewählt werden, wenn beabsichtigt ist, speziell bevorzugte Umsetzungsverhältnisse einzustellen. Soll beispielsweise ein Polymer P mit den Endgruppen (I) und (II), wie im Hauptanspruch beschrieben, hergestellt werden und zeichnet sich beispielsweise die Verbindung (III) durch eine erheblich höhere Reaktivität als die Verbindung (IV) aus, kann auf diese Weise eine gleichmäßigere Umsetzung der Verbindungen (III) und (IV) mit dem Polymer P' erreicht werden, wobei unter gleichmäßig verstanden werden soll, dass die Zahl der Endgruppen (I) und (II) am betrachteten Polymer P nach der Umsetzung ähnlich sein soll. Auch dieses Verfahren lässt sich als Eintopfverfahren durchführen.

Gibt man die Verbindung (II) und (IV) in kurzem zeitlichen Abstand hinzu, wird darunter verstanden, dass zuerst die Verbindung (IV) und danach die Verbindung (III) der Umsetzung zugeführt wird.

Unter einem kurzen zeitlichen Abstand wird ein Zeitraum zwischen unmittelbar nacheinander und einigen Minuten Zeitverzug verstanden. Zwischen der Zugabe der beiden Verbindungen kann also ein Zeitraum von 1,2,5,10,15,20 oder 30 Minuten liegen. Bevorzugt beträgt ein kurzer zeitlicher Abstand 5 bis 15 Minuten.

Ein weiterer Gegenstand der vorliegenden Erfindung ist ein Verfahren zur Herstellung einer härtbaren Zusammensetzung, bei dem man zunächst
a) ein Polymer P' mit einem Polymergerüst mit mindestens zwei terminalen funktionellen Gruppen C mit der Verbindung (III)

   D-K¹-SiXYZ (III),

   getrennt hiervon
b) ein Polymer P" mit einem Polymergerüst mit mindestens zwei terminalen funktionellen Gruppen C mit der Verbindung (IV)

   D-K²-SiXYZ (IV),

   umsetzt, und
c) anschließend die Reaktionsprodukte aus Schritt a) und Schritt b) miteinander vermischt,
   wobei C und D aus einer der Gruppen
   - -OH, -NHR², -NH₂, -Cl, -Br, -SH und
   - -NCO, -NCS, -C(=O)Cl, -C(=O)OR³
   ausgewählt sind, und C und D nicht derselben Gruppe angehören,
   K¹, K² unabhängig voneinander für eine bivalente aliphatischen Kohlenwasserstoffgruppe steht, die eine Hauptkette von 1 bis 6 Kohlenstoffatomen aufweist, wobei die Kohlenwasserstoffgruppen K¹, K² verschieden sind,
   X, Y und Z unabhängig voneinander für eine Hydroxygruppe oder eine hydrolisierbare Gruppe stehen und
   R², R³ jeweils unabhängig voneinander für einen Kohlenwasserstoffrest mit 1 bis 20 C-Atomen stehen.

Bei diesem Verfahren kann man sowohl zwei Polymere P' und P", als auch bevorzugt zwei Chargen des gleichen Polymers P', mit den Verbindungen (III) und (IV) umzusetzen. Dabei erfolgt die Umsetzung und die Auswahl geeigneter Komponenten entsprechend nachfolgender Ausführungen, mit dem Unterschied, dass pro Polymer P', P" beziehungsweise pro Charge P' jeweils nur eine Verbindung (III) bzw. (IV) eingesetzt wird. Beide Umsetzungen werden getrennt durchgeführt. Anschließend werden die so erhaltenen Reaktionsprodukte, Polymer P₁ und P₂, miteinander vermischt.

Dabei können die Polymere P₁ und P₂ jeweils zu gleichen Teilen, aber auch zu verschiedenen Teilen in die Mischung eingebracht werden, bevorzugt ist jedoch ein Mischungsverhältnis von Polymer P₁ und Polymer P₂ zwischen 2:1 und 1:2, bevorzugt 1,5 : 1 und 1 : 1,5.

Für die Herstellung der Polymere P₁ bzw. P₂ nach diesem Verfahren eignen sich prinzipiell alle Polymere P', die mindestens zwei terminale funktionelle Gruppen C besitzen. Dabei werden vorzugsweise Alkydharze, Acrylate und Methacrylate, Acrylamide und Methacrylamide, Phenolharze, Polyalkylene, Polyamide, Polycarbonate, Polyole, Polyether, Polyester, Polyetherester, Polyurethane, Vinlypolymere sowie Copolymere aus mindestens zwei der vorgenannten Polymerklassen eingesetzt. Weiterhin eignen sich alle Polymere, die als Polymergerüst der Polymere P, P₁ bzw. P₂ oben beschrieben wurden.

Besonders bevorzugt werden Polyoxyalkylene, also Polyether, eingesetzt, da diese auch in ihrem Grundgerüst flexibel, aber gleichzeitig beständig sind. So werden Polyether normalerweise von Wasser und Bakterien, im Gegensatz zu beispielsweise Polyestern, nicht angegriffen oder zersetzt.

Ganz besonders bevorzugt werden Polyethylenoxid oder Polypropylenoxid, insbesondere solche, die eine Polydispersität von weniger als 2, bevorzugt weniger als 1,5 aufweisen.

Die terminalen Gruppen C können sich beispielsweise von der Wiederholungseinheit des ausgewählten Gerüstpolymers ableiten, also funktionelle Gruppen des das Polymer P', P" aufbauenden Monomers sein, durch Umfunktionalisierung von Endgruppen C des Polymergerüsts eingeführt werden, oder als weitere funktionelle Gruppen vorliegen. Dabei eignen sich als Gruppen C alle funktionellen Gruppen, die zu einer Bindungsknüpfung befähigt sind.

Als weitere Komponenten werden in den erfindungsgemäßen Verfahren zwei Verbindungen (III), (IV) eingesetzt, die über mit C reaktive Gruppen D verfügen. Dabei sind als Gruppen D alle funktionellen Gruppen vorstellbar, die mit den funktionellen Gruppen C des Polymers P' bzw. P" verknüpft werden können.

Bevorzugt werden die funktionellen Gruppen C und D jeweils aus einer der beiden folgenden Gruppen ausgewählt, wobei die funktionellen Gruppen C und D im erfindungsgemäßen Verfahren nicht aus der gleichen Gruppen entnommen werden.
- Gruppe I: Hydroxy- (-OH); Amino- (-NH₂); sekundäre Amino- (-NHR)-; Halogengruppen, wie beispielsweise Chlorid (-Cl) oder Bromid (-Br); Sulfanyl- (-SH);
- Gruppe II: Isocyanato- (-NCO, auch: Isocyanat-), Isothiocyanato- (-NCS), Acylchloro-(-C(=O)Cl), Ester- (-C(=O)OR), Sulfonsäure- (-SO₃H) Sulfonsäurechlorid- (-SO₃Cl), ethylenisch ungesättigte Gruppen.

Dabei ist es Bestandteil des allgemeinen Fachmannwissens, eine geeignete Auswahl dahingehend zu treffen, dass die Gruppen C und D miteinander reagieren können.

So eignen sich beispielsweise zur Umsetzung mit einem Polymer P' bzw. P", dessen funktionelle Gruppen C Halogen-, Hydroxy-, Amino- oder Sulfanylgruppen sind, besonders bevorzugt Verbindungen (III), (IV) mit Gruppen D ausgewählt aus Acylchloro-, Isocyanato-, Thioisocyanato- und Estergruppen, ganz besonders bevorzugt Isocyanatogruppen.

Ebenso ist es vorstellbar, die Gruppen C aus Acylchloro-, lsocyanato-, Thioisocyanato- und Estergruppen und die Gruppen D aus Halogen-, Hydroxy-, Amino- oder Sulfanylgruppen auszuwählen.

Wenn als Gruppe D eine NCO-Gruppe ausgewählt wird, können vorzugsweise folgende Isocyanatosilane eingesetzt werden: Trimethoxysilylmethylisocyanat, Triethoxysilylmethylisocyanat, Trimethoxysilylethylisocyanat, Triethoxysilylethylisocyanat, Trimethoxysilylpropylisocyanat, Triethoxysilylpropylisocyanat, Trimethoxysilylbutylisocyanat, Triethoxysilylbutylisocyanat, Trimethoxysilylpentylisocyanat, Triethoxysilylpentylisocyanat, Trimethoxysilylhexylisocyanat, Triethoxysilylhexylisocyanat.

Besonders bevorzugt werden Trimethoxysilylmethylisocyanat,

Triethoxysilylmethylisocyanat, Trimethoxysilylpropylisocyanat und Trimethoxysilylpropylisocyanat.

Als Reaktionspartner für Verbindungen, bei denen als Gruppen D Isocyanatgruppen ausgewählt wurden, eignen sich besonders bevorzugt Polyole und Polyamine, insbesondere Polyethylen- und Polypropylenglykole.

Ferner kann man die erfindungsgemäßen Verfahren in Gegenwart von Katalysatoren durchführen. Für den Fall, dass z.B. als Gruppe C Hydroxy- oder Aminogruppen und als Gruppe D Isocyanatgruppen vorliegen oder für die Gruppe C Isocyanatgruppen und für die Gruppe D Hydroxy- oder Aminogruppen vorliegen, können alle aus der Polyurethanherstellung bekannten Katalysatoren eingesetzt werden.

Zu den üblicherweise im Rahmen einer solchen Polyurethanherstellung eingesetzten Katalysatoren zählen beispielsweise stark basische Amide wie 2,3-Dimethyl-3,4,5,6-tetrahydropyrimidin, Tris-(dialkylaminoalkyl-s-hexahydrotriazine, z. B. Tris-(N,N-dimethylaminopropy))-s-hexahydrotriazin oder die üblichen tertiären Amine, z. B. Triethylamin, Tributylamin, Dimethylbenzylamin, N-Ethyl-, N-Methyl-, N-Cyclohexylmorpholin, Dimethylcyclohexylamin, Dimorpholinodiethylether, 2-(Dimethylaminoethoxy)-ethanol, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethy)aminopropyl)-harnstoff, N,N'-Dimethylpiperazin, 1,2-Dimethylimidazol, Di-(4-N,N-dimethylaminocyclohexyl)-methan und dergleichen, sowie organische Metallverbindungen wie Titansäureester, Eisenverbindungen wie z. B. Eisen-(III)-acetylacetonat, Zinnverbindungen, z. B. Zinn-(II)-Salze von organischen Carbonsäuren, beispielsweise Zinn-(II)-diacetat, das Zinn-(II)-Salz der 2-Ethylhexansäure (Zinn-(II)-octoat), Zinn-(II)-dilaurat oder die Dialkylzinn-(IV)-Salze von organischen Carbonsäuren, wie z. B. Dibutylzinn-(IV)-diacetat, Dibutylzinn-(IV)-dilaurat (DBTL), Dibutylzinn-(IV)-maleat oder Dioctylzinn-(IV)-diacetat oder dergleichen, sowie Dibutylzinn-(IV)-dimercaptid oder Gemische aus zwei oder mehr der genannten Als Katalysatoren zur Steuerung der Härtungsgeschwindigkeit der sowie Mischungen aus stark basischen Aminen und organischen Metallverbindungen eingesetzt werden.

Besonders bevorzugt sind Bismutkatalysatoren, da diese die Verknüpfung der Gruppen C und D zu Urethan- und Isocyanuratgruppen fördern, eine Aktivierung der Silylgruppen, insbesondere der Alkoxysilylgruppen, und somit eine vorzeitige Aushärtung aber nicht stattfindet.

Als Bismutkatalysatoren können Bismutcarboxylate, beispielsweise Bismut-(2-ethylhexanoat), Bismut-neodecanoat, Bismut-tetramethylheptandionat, Bismut-(II)-diacetat, Bismut-(II)-dilaurat oder die Dialkylbismut-(IV)-Salze, z. B. Dibutylbismut-(IV)-diacetat, Dibutylbismut-(IV)-dilaurat, Dibutylbismut-(IV)-maleat oder Dioctylbismut-(IV)-diacetat oder dergleichen, sowie Dibutylbismut-(IV)-dimercaptid oder Gemische aus zwei oder mehr der genannten Katalysatoren eingesetzt werden.

Die Katalysatoren können in üblichen Mengen, beispielsweise etwa 0,002 bis etwa 5 Gew.%, bezogen auf die Polyalkohole, verwendet werden.

Gemäß einer weiteren bevorzugten Ausführungsform der erfindungsgemäßen Verfahren werden diese bei erhöhter Temperatur, insbesondere in einem Bereich zwischen 60 und 100 °C, besonders bevorzugt zwischen 75 bis 85 °C durchgeführt.

Vorteilhafterweise kann man durch Erhöhen der Temperatur die Umsetzung beschleunigen oder gegebenenfalls auch erst in Gang bringen.

Ferner kann man die Umsetzung bei vermindertem Druck, also in einem Teilvakuum, durchführen. Bevorzugt stellt man einen Druck zwischen 10 und 1000 Pa ein. Damit kann man bei der Umsetzung eventuell entstehende Nebenprodukte, insbesondere niedermolekulare Verbindungen mit einem Molekulargewicht unter 200 g/mol, insbesondere Wasser oder Ammoniak, aus der Umsetzung entfernen. Damit kann eine höhere Reinheit des Umsetzungsprodukts P, P₁ bzw. P₂ erreicht werden. Außerdem ist es so möglich, einen höheren Umsetzungsgrad, also eine höhere Effizienz der Umsetzung zu erreichen.

Es ist auch denkbar, die erfindungsgemäßen Verfahren bei erhöhter Temperatur und vermindertem Druck durchzuführen. Dadurch kann man die Umsetzung beschleunigen und gleichzeitig eine höhere Reinheit des Umsetzungsprodukts erzielen.

Nach einer weiteren bevorzugten Ausführungsform der erfindungsgemäßen Verfahren beträgt das Verhältnis von funktionellen Gruppen D zu funktionellen Gruppen C zwischen 3:1 bis 1:1.

Es hat sich als vorteilhaft erwiesen, die Verbindungen mit den funktionellen Gruppen D, die mit den terminalen funktionellen Gruppen C des Polymers P' bzw. P" umgesetzt werden, in Bezug auf die Anzahl der funktionellen Gruppen im Überschuss einzusetzen. Dadurch kann ein höherer Umsetzungsgrad bezogen auf die Gruppen C von P' bzw. P" erreicht werden. Falls nach der Umsetzung noch funktionelle Gruppe D im Umsetzungsprodukt vorliegen, können die Stoffe mit diesen Gruppen nach gängigen Verfahren, wie z. B. Destillation oder Extraktion entfernt werden. Weiterhin kann man einen Überschuss an funktionellen Gruppen D durch eine Zugabe von niedermolekularen Verbindungen, die ebenfalls mit den Gruppen D reagieren, beseitigen. Hierzu können niedermolekulare Verbindungen eingesetzt werden, die die oben beschriebenen Gruppen C aufweisen. Dabei werden unter niedermolekularen Verbindungen solche verstanden, die ein Molekulargewicht von weniger als 200 g/mol aufweisen. Beispielsweise kann man Methanol oder Ethanol einsetzen, wenn D für NCO steht.

Bei der Umsetzung der Polymere P' und P" reagieren deren Endgruppen C mit den Gruppen D der Verbindungen (III) beziehungsweise (IV) unter Ausbildung der bivalenten Bindegruppen A zu den Polymeren P, P₁, P₂. Dabei unterscheidet sich die sogenannte bivalente Bindegruppe A gewöhnlich von den Strukturmerkmalen der Polymere P₁ bzw. P₂, die in aller Regel ebenfalls funktionelle Gruppen aufweisen, z.B. als Verknüpfung oder als Bestandteile der Wiederholungseinheiten.

In Fällen, in denen die bivalente Bindegruppe A von funktionellen Gruppen des Polymergerüsts von P, P₁ bzw. P₂ unterscheidbar ist, entspricht m dem Wert 1.

Falls die bivalenten Bindegruppen A von den funktionellen Gruppen des Polymergerüsts nicht unterscheidbar sind, entspricht m dem Wert 0. Der Index m trifft folglich keine Aussage über das Vorhandensein der bivalenten Bindegruppe A, sondern über ihre Unterscheidbarkeit von der Struktur des Polymergerüsts.

Besonders bevorzugt beträgt das Verhältnis von funktionellen Gruppen D zu funktionellen Gruppen C zwischen 2:1 und 1,3:1. Durch Auswahl dieser vorteilhaften Verhältnisse kann man erreichen, dass der Überschuss an Verbindungen mit funktionellen Gruppen D zu Polymeren P', P" mit funktionellen Gruppen C in Bezug auf die Gruppen D und C gering ist. Idealerweise setzt man dennoch einen kleinen Überschuss an Verbindungen mit funktionellen Gruppen D ein, um die terminalen Gruppen C der Polymere P' und P" möglichst vollständig umzusetzen und so die Polymere P, P₁ bzw. P₂ zu erhalten. Vorteilhafterweise setzt man die Verbindungen mit den Gruppen D im Überschuss ein, da es einfacher ist, eine niedermolekulare Verbindung, wie z.B. eine mit Gruppen D, aus dem Reaktionsprodukt zu entfernen als Polymere P' bzw. P", bei denen nicht alle Gruppen C umgesetzt wurden.

Ein weiteres Herstellungsverfahren zur Herstellung der erfindungsgemäßen Polymere P, P₁ bzw. P₂ geht von Polymere P' bzw. P" mit ethylenisch ungesättigten Endgruppen C aus. In diesem Fall bedeutet die Gruppe D der Verbindung (III) bzw. (IV) ein Wasserstoffatom. Solche Umsetzungen werden gewöhnlich bei Temperaturen von 30 bis 150°C, vorzugsweise 60 bis 120°C in Gegenwart eines Katalysators über mehrere Stunden durchgeführt. Als Katalysatoren eignen sich Platin-, Rhodium-, Kobalt-, Palladium- oder Nickelverbindungen. Bevorzugt werden Platinkatalysatoren wie Platinmetall, Platinchlorid und Chloroplatinsäure.

Ein weiterer Gegenstand der vorliegenden Erfindung ist eine härtbare Zusammensetzung, die nach einem der erfindungsgemäßen Verfahren hergestellt werden kann.

Diese Zusammensetzungen zeichnen sich durch hohe Elastizität, Flexibilität und Dehnbarkeit bei angemessenen Abbinde- und Härtungszeiten aus.

Ein weiterer Gegenstand der vorliegenden Erfindung ist eine Zubereitung, die die erfindungsgemäße härtbare Zusammensetzung, oder eine Zusammensetzung, die nach einem der erfindungsgemäßen Verfahren hergestellt wurde, enthält.

Diese Zubereitungen umfassen Zusammensetzungen, die verbesserte elastische Eigenschaften und eine verbesserte Rückstellfähigkeit besitzen. Ferner weisen sie eine hinreichend lange Verarbeitungszeit und härten dennoch zügig aus. Die erfindungsgemäßen Zubereitungen können weitere Stoffe enthalten, mit denen ihre sie in Hinblick auf die gewünschte Anwendung weiter angepasst werden können.

Nach einer weiteren bevorzugten Ausführungsform der erfindungsgemäßen Zubereitung enthält diese ferner mindestens eine Verbindung ausgewählt aus der Gruppe umfassend Weichmacher, Stabilisatoren, Antioxidantien, Katalysatoren, Füllstoffe, Verdünner bzw. Reaktiwerdünner, Trockenmittel, Haftvermittler und UV-Stabilisatoren, Fungizide, Flammschutzmittel, Pigmente, rheologische Hilfsmittel und/oder Lösungsmittel.

Es ist auch denkbar, dass die Viskosität des erfindungsgemäßen Kleb- oder Dichtstoffs für bestimmte Anwendungen zu hoch ist. Diese kann man dann in der Regel durch Verwendung eines Reaktiwerdünners auf einfache und zweckmäßige Weise verringern einstellen, ohne dass es zu Entmischungserscheinungen (z.B. Weichmacherwanderung) in der ausgehärteten Masse kommt.

Vorzugsweise weist der Reaktivverdünner mindestens eine funktionelle Gruppe auf, die nach der Applikation z.B. mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme.

Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Die Viskosität des Reaktivverdünners beträgt bevorzugt weniger als 20.000 mPas, besonders bevorzugt etwa 0,1 - 6.000 mPas, ganz besonders bevorzugt 1- 1000 mPas (Brookfield RVT, 23 °C, Spindel 7, 10 U/min).

Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, wie Methyltrimethoxysilan, Methyltriethoxysilan sowie Vinyltrimethoxysilan (Geniosil XL 10, Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen.

Ferner sind ebenfalls folgende Polymere von Kaneka Corp. als Reaktiwerdünner einsetzbar: MS S203H, MS S303H, MS SAT 010, und MS SAX 350.

Ebenso kann man silanmodifizierte Polyether verwenden, die sich z.B. aus der Umsetzung von Isocyanatosilan mit Synalox Typen ableiten.

Weiterhin kann man als Reaktivverdünner Polymere einsetzen, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH - Gruppen enthalten kann. Die OH -Gruppen können sowohl primär als auch sekundär sein.

Zu den eigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie z.B. Ester, Carbonate, Amide enthalten.

Zur Herstellung der erfindungsgemäß bevorzugten Reaktiwerdünner wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt.

Vorzugsweise weist die im Rahmen der vorliegenden Erfindung als Reaktiwerdünner vorliegende Verbindung mindestens eine Alkoxysilylgruppe auf, wobei unter den Alkoxysilylgruppen die Di- und Trialkoxysilylgruppen bevorzugt sind.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und - 1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylytendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bisisocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

Ebenso kann man als Polyisocyanate drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der erfindungsgemäßen Zubereitung lassen sich neben oder anstatt eines Reaktivverdünners auch Lösungsmittel und / oder Weichmacher einsetzen.

Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da hier die Lagerstabilität steigt. C₁-C₁₀-Alkohole, besonders Methanol, Ethanol, i-Propanol, Isoamylalkohol und Hexanol werden bevorzugt.

Die erfindungsgemäße Zubereitung kann ferner hydrophile Weichmacher enthalten. Diese dienen zur Verbesserung der Feuchtigkeitsaufnahme und damit zur Verbesserung der Reaktivität bei niedrigen Temperaturen. Als Weichmacher geeignet sind beispielsweise Ester der Abietinsäure, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester wie z.B. C₁₀-C₂₁-Al kansulphonsäurephenylester (Mesamoll, Fa. Bayer), Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf).

Beispielsweise eignen sich von den Phthalsäureestern Dioctylphthalat, Dibutylphthalat, Diisoundecylphthalat oder Butylbenzylphthalat, von den Adipaten Dioctyladipat, Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ferner eignen sich als Weichmacher endgruppenverschlossene Polyethylenglykole. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Besonders bevorzugt sind jedoch endgruppenverschlossene Polyethylenglykole, wie Polyethylen- oder Polypropylenglykoldialkylether, wobei der Alkylrest ein bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Als Katalysatoren zur Steuerung der Härtungsgeschwindigkeit der erfindungsgemäßen härtbaren Zusammensetzungen sind beispielsweise metallorganische Verbindungen wie Eisen- oder Zinnverbindungen geeignet, insbesondere die 1,3-Dicarbonylverbindungen des Eisens oder des zwei- bzw. vierwertigen Zinns, die Zinn-(II)-carboxylate beziehungsweise die Dialkylzinn-(IV)-Dicarboxylate oder die entsprechenden Dialkoxylate, z.B. Dibutylzinndilaurat, Dibutylzinndiacetat, Dioctylzinndiacetat, Dibutylzinnmaleat, Zinn(II)octoat, Zinn(II)phenolat oder die Acetylacetonate des zwei- bzw. vierwertigen Zinns. Ferner kann man auch Alkyltitanate, Siliziumorganische Titanverbindungen oder Bismut-tris-2-ethylhexanoat, saure Verbindungen wie Phosphorsäure, p-Toluolsulfonsäure oder Phthalsäure, aliphatische Amine wie Butyl-, Hexyl-, Octyl- Decyl- oder Laurylamin, aliphatische Diamine wie z.B. Ethylendiamin, Hexyldiamin oder auch aliphatische Polyamine wie Diethylentriamin, Triethylentetramin, Tetraethylenpentamin, heterocyklische N-Verbindungen, z.B. Piperidin, Piperazin, aromatische Amine wie m-Phenylendiamin, Ethanolamin, Triethylamin und andere Härtungskatalysatoren für Epoxide einsetzen.

Ferner eignen sich folgende Zinnverbindungen: Di(n-butyl)zinn(IV)di(methylmaleat), Di(n-butyl)zinn(IV)-di(butylmaleat), Di(n-octyl)zinn(IV)-di(methylmaleat), Di(n-octyl)zinn(IV)-di(butylmaleat), Di(n-octyl)zinn(IV)-di(iso-octylmaleat), Di(n butyl)zinn(IV)sulfid, Di(n-butyl)zinn(IV)oxid, Di(n-octyl)zinn(IV)oxid, (n Butyl)₂Sn(SCH₂COO), (n-Octyl)₂Sn(SCH₂COO), (n-Octyl)₂Sn(SCH₂CH₂COO), (n-Octyl)₂Sn-(SCH₂CH₂COOCH₂CH₂OCOCH₂S), (n Buty)₂Sn(SCH₂COO-i-C₈H₁₇)₂, (n-Octyl)₂Sn(SCH₂COO-i-C₈H₁₇)₂, (n-Octyl)₂Sn(SCH₂COO-n-C₈H₁₇)₂.

Chelatbildende Zinnorganyle können ebenso eingesetzt werden, z.B. Di(n-butyl)zinn-(IV)-di(acetylacetonat), Di(n-octyl)zinn-(IV)di(acetylacetonat), (n-octyl)(n-butyl)-zinn-(IV)-di(acetylacetonat).

Gerade bei den zinkorganischen Verbindungen handelt es sich um wohl erprobte und einfach zugängliche Katalysatoren mit ausgezeichneter Aktivität. Einige Zinnorganyle sind jedoch aufgrund physiologischer und ökologischer Bedenken in die Kritik geraten. Deshalb ist die erfindungsgemäße härtbare Zusammensetzung in einer weiteren bevorzugten Ausführungsform zinnfrei. Dennoch lässt sich die erfindungsgemäße Zusammensetzung unter Verwendung alternativer Katalysatoren ohne Qualitätsverlust gut und schnell aushärten.

Als Härtungskatalysatoren kann man ferner Borhalogenide wie Bortrifluorid, Bortrichlorid, Bortribromid, Bortrijodid oder gemischte Borhalogenide einsetzen. Besonders bevorzugt sind Bortrifluoridkomplexe wie z.B. Bortrifluorid-diethyletherat (CAS-Nr. [109-63-7]), die als Flüssigkeiten einfacher handhabbar sind als die gasförmigen Borhalogenide.

Ferner ist 1,8-Diazabicyclo-[5.4.0]-undec-7-en (DBU) als Katalysator für die erfindungsgemäße Zusammensetzung geeignet.

Ferner können vorzugsweise als Katalysatoren Titan-, Aluminium- und Zirkonverbindungen oder Mischungen aus einem oder mehreren Katalysatoren aus einer oder mehrerer der gerade erwähnten Gruppen eingesetzt werden. Diese Katalysatoren eignen sich als Härtungskatalysatoren für die Alkoxysilanpolymere. Einerseits kann man so den Einsatz von Zinnverbindungen vermeiden, zum anderen kann man so eine bessere Adhäsion zu normalerweise schlecht anhaftenden organischen Oberflächen wie z. B. Acrylaten verbessern. Unter den Titan-, Aluminium- und Zirkonkatalysatoren werden die Titankatalysatoren bevorzugt eingesetzt, da mit ihnen die besten Härtungsergebnisse erzielt werden.

Als Titankatalysatoren eignen sich Verbindungen, die Hydroxygruppen und/oder substituierte oder unsubstituierte Alkoxygruppen aufweisen, also Titanalkoxide der allgemeinen Formel

Ti (OR^{z})₄,

wobei R^{z} eine organische Gruppe, vorzugsweise eine substituierte oder unsubstituierte Kohlenwasserstoffgruppe mit 1 bis 20 C-Atomen und die 4 Alkoxygruppen -OR^{z} gleich oder verschieden sind. Ferner können ein oder mehrere der Reste -OR^{z} durch Acyloxygruppen -OCOR^{z} ersetzt werden.

Ebenso eigenen sich als Titankatalysatoren Titanalkoxide, bei denen ein oder mehrere Alkoxygruppen durch Halogenatome ersetzt sind.

Ferner kann man Titanchelatkomplexe einsetzen.

Man kann auch Aluminiumkatalysatoren als Härtungskatalysatoren einsetzen, z.B. Aluminiumalkoxide

Al(OR^{z})₃,

wobei R^{Z} eine organische Gruppe, bevorzugt ein substituierter oder unsubstituierter Kohlenwasserstoffrest mit 1 bis 20 C-Atomen bedeutet und die drei Reste R^{z} gleich oder verschieden sind.

Auch bei den Aluminiumalkoxide können ein oder mehrere der Alkoxyreste auch durch Acyloxyreste -OC(O)R^{z} ersetzt sein.

Ferner kann man Aluminiumalkoxide einsetzen, bei denen ein oder mehrere Alkoxyreste durch Halogengruppen ersetzt sind.

Von den beschriebenen Aluminiumkatalysatoren sind die reinen Aluminiumalkoholate in Hinblick auf ihre Stabilität gegenüber Feuchtigkeit und die Härtbarkeit der Mischungen, denen sie zugesetzt werden, bevorzugt. Außerdem werden Aluminium-Chelatkomplexe bevorzugt.

Als Zirkonkatalysatoren eignen sich: Tetramethoxyzirkon, Tetraethoxyzirkon. Ganz besonders bevorzugt kann man Diisopropoxyzirkonbis(ethylacetoacetat), Triispropoxyzirkon(ethylacetoacetat) and Isopropoxyzirkontris(ethylacetoacetat).

Ferner kann man beispielwseise Zirkonacylate einsetzen.

Auch halogenierte Zirkonkatalysatoren lassen sich einsetzen.

Ferner kann man auch Zirkonchelatkomplexe einsetzen.

Außerdem kann man als Härtungskatalysatoren Carbonsäuresalze von Metallen, oder auch eine Mischung mehrerer solcher Salze, heranziehen, wobei diese ausgewählt sind aus den Carboxylaten folgender Metalle: Calcium, Vanadium, Eisen, Titan, Kalium, Barium, Mangan, Nickel, Kobalt und/oder Zirkon.

Von den Carboxylaten sind die Calcium-, Vanadium-, Eisen-, Titan-, Kalium-, Barium-, Mangan- und Zirkoniumcarboxylate bevorzugt, da sie eine hohe Aktivität aufweisen.

Besonders bevorzugt werden Calcium-, Vanadium-, Eisen-, Titan- und Zirkoniumcarboxylate.

Ganz besonders bevorzugt werden Eisen- und Titancarboxylate.

Der Katalysator, bevorzugt Mischungen mehrerer Katalysatoren wird vorzugsweise in einer Menge von 0,001 bis etwa 5 Gew.%, bezogen auf das Gesamtgewicht der Zubereitung eingesetzt. Bevorzugt sind Gew.% von 0,01 bis 1, insbesondere 0,03 bis 0,5, besonders bevorzugt kleiner als 0,1, Gew.% Katalysator, bezogen auf das Gesamtgewicht der Zubereitung.

Die erfindungsgemäße Zubereitung kann außerdem bis zu etwa 20 Gew.-% an üblichen Haftvermittlern (Tackifier) enthalten. Unter einem Haftvermittler wird eine Substanz verstanden, die die Haftungseigenschaften von Klebeschichten auf Oberflächen verbessert. Es können ein oder mehrere Haftvermittler enthalten sein. Als Haftvermittler geeignet sind beispielsweise Harze, Terpen-Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden beispielsweise auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Zusatzstoff im oben genannten Sinne geeignet sind die Kolophoniumharze und deren Derivate, beispielsweise deren Ester oder Alkohole.

Besonders gut geeignet sind Silan-Haftvermittler, insbesondere Alkoxysilane, mit einer (weiteren) funktionellen Gruppe wie z.B. einer Aminogruppe, einer Mercaptogruppe, einer Epoxygruppe, einer Carboxylgruppe, einer Vinylgruppe, einer Isocyanatgruppe, einer Isocyanuratgruppe oder einem Halogen. Beispiele sind γ-Mercaptopropyltrimethoxysilan, γ-Mercaptopropyltriethoxysilan, γ-Mercaptopropylmethyldimethoxysilan, γ-Glycidoxypropyltrimethoxysilan, γ-Glycidoxypropyltriethoxysilan, γ-Glycidoxypropylmethyldimethoxysilan, β-Carboxyethyltriethoxysilan, β-Carboxyethylphenylbis(2-methoxyethoxy)silan, N-β-(Carboxymethyl) aminoethyl-γaminopropyltrimethoxysilan, Vinyltrimethoxysilan, Vinyltriethoxysilan, γ-Acroyloxypropylmethyltriethoxysilan, γ-Isocyanatopropyltrimethoxysilan, γ-Isocyanatopropyltriethoxysilan, γ-Isocyanatopropylmethyldiethoxysilan, γ-Isocyanatopropylmethyldimethoxysilan, Tris(trimethoxysilyl)isocyanurat und γ-Chloropropyltrimethoxysilan.

Besonders bevorzugt als Haftvermittler sind insbesondere Aminosilane (aminofunktionelle Alkoxysilane bzw. Aminoalkyl-alkoxysilane), wie z.B. γ-Aminopropyl-trimethoxysilan, γ-Aminopropyltriethoxysilan, γ-Aminopropyltriisopropoxysilan, γ-Aminopropylmethyldimethoxysilan, γ-Aminopropylmethyldiethoxysilan, γ-(2-Aminoethyl)-3-aminopropyltrimethoxysilan, γ-(2-Aminoethyl) aminopropylmethyldimethoxysilan, γ-(2-Aminoethyl)aminopropyltriethoxysilan, γ-(2-Aminoethyl) aminopropylmethyldiethoxysilan, γ-(2-Aminoethyl) aminopropyltriisopropoxysilan, N-Phenyl-γ-aminopropyltrimethoxysilan, N-Benzyl-γ-aminopropyltrimethoxysilan, und N-Vinylbenzyl-γ-aminopropyltriethoxysilan, oder oligomere Aminosilane, wie z.B. aminoalkylgruppenmodifiziertes Alkylpolysiloxan (Dynasylan 1146).

Ferner kann die erfindungsgemäße Zubereitung weiterhin bis zu etwa 7 Gew.%, insbesondere bis zu etwa 5 Gew.-% Antioxidantien enthalten.

Der erfindungsgemäße Zubereitung kann bis zu etwa 2 Gew.%, vorzugsweise etwa 1 Gew.% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen.

Eine solche Verbesserung der Lagerbarkeit lässt sich beispielsweise durch den Einsatz von Trockenmitteln erreichen. Als Trockenmittel eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muss die Reaktivität der Trockenmittel gegenüber in die Zubereitung eingedrungener Feuchtigkeit höher sein, als die Reaktivität der Endgruppen des in der Zubereitung vorliegenden erfindungsgemäßen silylgruppentragenden Polymers

Als Trockenmittel eignen sich beispielsweise Isocyanate.

Es ist auch denkbar, als Verbindung mit der funktionellen Gruppe D Isocyanatosilane in geringem Überschuss, etwa im Verhältnis 1,3:1, einzusetzen. Wenn aus der Umsetzung des Polymers mit der Verbindung (III) bzw. (IV) überschüssiges Isocyanatosilan in der Zubereitung verbleibt, kann dieses direkt als Trockenmittel dienen.

Vorteilhafterweise werden als Trockenmittel jedoch Silane eingesetzt. Beispielsweise Vinylsilane wie 3-Vinylpropyltriethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder - ethylethoxysilan ist möglich. Besonders bevorzugt sind hier Vinyltrimethoxysilan und Tetraethoxysilan hinsichtlich Effizienz und Kosten

Ebenfalls als Trockenmittel geeignet sind die oben genannten Reaktiwerdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemäßen silylgruppentragenden Polymers.

Schließlich können als Trockenmittel auch Alkylorthoformiate oder -orthoacetate eingesetzt werden, bsw. Methyl- oder Ethylorthoformiat, Methyl- oder Ethylorthoacetat,

Die erfindungsgemäßen Kleb- und Dichtstoffe enthalten in der Regel etwa 0 bis etwa 6 Gew.-% Trockenmittel.

Die erfindungsgemäße Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Wasnussschalen und andere Faserkurschnitte. Ferner können auch Kurzfasem wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g, insbesondere von 35 bis 65 m²/g, auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Besonders bevorzugt wird eine hochdisperse Kieselsäure mit einer BET-Oberfläche von 45 bis 55 m²/g eingesetzt, insbesondere mit einer BET-Oberfläche von etwa 50 m²/g. Derartige Kieselsäuren weisen den zusätzlichen Vorteil einer um 30 bis 50 % verkürzten Einarbeitungszeit im Vergleich zu Kieselsäuren mit höherer BET-Oberfläche auf. Ein weiterer Vorteil liegt darin, dass sich die genannte hochdisperse Kieselsäure in silanterminierte Kleb-, Dicht- oder Beschichtungsstoffe in erheblich höherer Konzentration einarbeiten lässt, ohne dass die Fließeigenschaften der Kleb-, Dicht- oder Beschichtungsstoffe beeinträchtigt werden.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis sind z.B. unter den Handelsbezeichnungen Expancel® oder Dualite® erhältlich. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Additive bzw. Hilfsmittel beschrieben, z. B. z. B., Kieselgele, Aerosile, Kohle, Ruß oder quellbare Kunststoffe wie PVC. Ferner können als rheologische Modifikatoren folgende organische Additive eingesetzt werden: hydrogenisiertes Rizinusöl, Fettsäureamide Harnstoffderivate und Polyharnstoffderivate.. Um gut aus einer geeigneten Dosiervorrichtung (z. B. Tube oder Kartusche) auspressbar zu sein, besitzen solche Zubereitungen eine Viskosität von 3.000 bis 15.000, vorzugsweise 40.000 bis 80.000 mPas oder auch 50.000 bis 60.000 mPas.

Die Füllstoffe werden vorzugsweise in einer Menge von 1 bis 80 Gew.-% bezogen auf das Gesamtgewicht der Zubereitung eingesetzt.

Die Herstellung der erfindungsgemäßen Zubereitung erfolgt nach bekannten Verfahren durch inniges Vermischen der Bestandteile in geeigneten Dispergieraggregaten, z. B. einem Schnellmischer.

Ein weiterer Gegenstand der vorliegenden Erfindung betrifft die Verwendung der erfindungsgemäßen Zusammensetzung oder der erfindungsgemäßen Zubereitung als Klebstoff, Dichtmasse, Spachtelmasse und zur Herstellung von Formteilen. Ein weiteres Anwendungsgebiet der erfindungsgemäßen Zusammensetzungen ist die Verwendung als Dübel-, Loch- oder Rissspachtelmasse.

Die erfindungsgemäßen Zusammensetzungen und Zubereitungen eignen sich also zum Verkleben von Kunststoffen, Metallen, Glas, Keramik, Holz, Holzwerkstoffen, Papier, Papierwerkstoffen, Gummi und Textilien, zum Verkleben von Fußböden, Abdichten von Bauwerksteilen, Fenstern, Wand- und Bodenbelägen sowie Fugen im allgemeinen. Hierbei können die Materialien jeweils mit sich selbst oder beliebig untereinander verklebt werden.

Eine bevorzugte Ausführungsform der erfindungsgemäßen Zubereitung kann enthalten:
- 5 bis 50 Gew.-%, bevorzugt 10 bis 40 Gew.-% einer oder mehrerer Verbindungen der erfindungsgemäßen Zusammensetzungen,
- 0 bis 30 Gew.-%, insbesondere weniger als 20 Gew.-%, besonders bevorzugt weniger als 10 Gew.-% Weichmacher; z.B. 0,5 - 30, insbesondere 1 - 25 Gew.% Weichmacher
- 0 bis 80 Gew.%, bevorzugt 20 bis 60 Gew.-%, besonders bevorzugt 30 bis 55 Gew.-% Füllstoffe.

Ferner kann die Ausführungsform weitere Hilfsstoffe enthalten, z.B. 0-10 Gew.%, insbesondere 0,5 - 5 Gew.-%.

Die Gesamtheit aller Bestandteile summiert sich zu 100 Gew.-%, wobei sich die Summe der oben aufgeführten Hauptbestandteile allein nicht zu 100 Gew.-% addieren muß.

Im Folgenden wird die Erfindung anhand von Ausführungsbeispielen und Herstellvorschriften näher erläutert.

### Beispiele & Herstellvorschriften

### Beispiele

### Polymer I (ausschl. γ- Trimethoxysilylfunktionalisierung)

328 g (18 mmol) Polypropylenglykol 18000 (OHZ = 6,2) (Acclaim 18200 N, Bayer MaterialScience AG, 51368 Leverkusen) werden in einem 500 ml Dreihalskolben bei 80°C im Vakuum getrocknet. Anschließend werden unter Stickstoffatmosphäre bei 80°C 0,07 g Dibutylzinndilaurat und 8 g (44 mmol) 3-Isocyanatopropyltrimethoxysilan zugegeben und eine Stunde bei 80°C gerührt.

Die entstandene Prepolymermischung wird abgekühlt und mit 7,0 g N-Trimethoxysilylmethyl-O-methylcarbamat (Geniosil XL 63, CAS-Nr: [23432-64-6], Wacker Chemie AG, D-81737 München) und 5,3 g einer Mischung (Tinuvin 765, Ciba Spec. Chem., D-68623 Lampertheim) aus 70 Gew.-% Bis(1, 2, 2, 6, 6-pentamethyl-4-piperidyl)sebacat und 30 Gew.-% Methyl-1,2,2,6,6-pentamethyl-4-piperidylsebazat versetzt.

Das Produkt wird feuchtigkeitsdicht unter Stickstoffatmosphäre in einem Glasgefäß gelagert, bevor es gemäß der allgemeinen Vorschrift zu einer härtbaren Zusammensetzung weiterverarbeitet wird.

### Polymer 11 (80 Gew.-% γ Trimethoxy-, 20 Gew.% α-Trimethoxy-methylsilylfunktionalisierung)

328 g (18 mmol) Polypropylenglykol 18000 (OHZ = 6,2) werden in einem 500 ml Dreihalskolben bei 80°C im Vakuum getrocknet. Anschließend werden unter Stickstoffatmosphäre bei 80°C 0,07 g Dibutylzinndilaurat, 7,5 g (35 mmol) 3-Isocyanatopropyltrimethoxysilan und 1,6 g (9 mmol) 1-Isocyanatomethyltrimethoxysilan (Geniosil XL 43, CAS-Nr. 78450-75-6, Wacker Chemie AG, D-81737 München) zugegeben und eine Stunde bei 80°C gerührt.

Die entstandene Prepolymermischung wird abgekühlt und mit 7,0 g Geniosil XL 63 und 5,3 g einer Mischung (Tinuvin 765) aus 70 Gew.% Bis(1,2,2,6,6-pentamethyl-4-piperidyl) sebacat und 30 Gew.% Methyl-1,2,2,6,6-pentamethyl-4-piperidylsebazat versetzt.

Das Produkt wird feuchtigkeitsdicht unter Stickstoffatmosphäre in einem Glasgefäß gelagert, bevor es gemäß der allgemeinen Vorschrift zu einer härtbaren Zusammensetzung weiterverarbeitet wird.

### Polymer III (50 Gew.% γ-Trimethoxy-. 50 Gew.% α-Trimethoxy-methylsilylfunktionalisierung)

330 g (18 mmol) Polypropylenglykol 18000 (OHZ = 6,2) werden in einem 500 ml Dreihalskolben bei 80°C im Vakuum getrocknet. Anschließend werden unter Stickstoffatmosphäre bei 80°C 0,07 g Dibutylzinndilaurat, 4,7 g (22 mmol) 3-Isocyanatopropyltrimethoxysilan und 4 g (22 mmol) 1-Isocyanatomethyltrimethoxysilan (Geniosil XL 43) zugegeben und eine Stunde bei 80°C gerührt.

Die entstandene Prepolymermischung wird abgekühlt und mit 7,0 g Geniosil XL 63 und 5,3 g einer Mischung (Tinuvin 765) aus 70 Gew.% Bis(1,2,2,6,6-pentamethyl-4-piperidyl) sebacat und 30 Gew.% Methyl-1,2,2,6,6-pentamethyl-4-piperidylsebazat versetzt. Das Produkt wird feuchtigkeitsdicht unter Stickstoffatmosphäre in einem Glasgefäß gelagert, bevor es gemäß der allgemeinen Vorschrift zu einer härtbaren Zusammensetzung weiterverarbeitet wird.

### Polymer IV (20 Gew.-% γ-Trimethoxy-, 80 Gew.% α-Trimethoxy-methylsilylfunktionalisierung)

330 g (18 mmol) Polypropylenglykol 18000 (OHZ = 6,2) werden in einem 500 ml Dreihalskolben bei 80°C im Vakuum getrocknet. Anschließend werden unter Stickstoffatmosphäre bei 80°C 0,07 g Dibutylzinndilaurat, 1,9 g (9 mmol) 3-Isocyanatopropylmethyldimethoxysilan und 6,4 g (35 mmol) 1-Isocyanatomethyltrimethoxysilan (Geniosil XL 43) zugegeben und eine Stunde bei 80°C gerührt.

Die entstandene Prepolymermischung wird abgekühlt und mit 7,0 g Geniosil XL 63 und 5,3 g einer Mischung (Tinuvin 765) aus 70 Gew.-% Bis(1,2,2,6,6-pentamethy)-4-piperidy)-sebacat und 30 Gew.-% Methyl-1,2,2,6,6-pentamethyl-4-piperidylsebazat versetzt.

Das Produkt wird feuchtigkeitsdicht unter Stickstoffatmosphäre in einem Glasgefäß gelagert, bevor es gemäß der allgemeinen Vorschrift zu einer härtbaren Zusammensetzung weiterverarbeitet wird.

### Polymer V (100 Gew.% α-Trimethoxy-methylsilylfunktionalisierung)

330 g (18 mmol) Polypropylenglykol 18000 (OHZ = 6,2) werden in einem 500 ml Dreihalskolben bei 80°C im Vakuum getrocknet. Anschließend werden unter Stickstoffatmosphäre bei 80°C 0,07 g Dibutylzinndilaurat, 8 g (44 mmol) 1-Isocyanatomethyltrimethoxysilan (Geniosil XL 43) zugegeben und eine Stunde bei 80°C gerührt.

Die entstandene Prepolymermischung wird abgekühlt und mit 7,0 g Geniosil XL 63 und 5,3 g einer Mischung (Tinuvin 765) aus 70 Gew.-% Bis(1,2,2,6,6-pentamethyl-4-piperidyl)-sebacat und 30 Gew.-% Methyl-1,2,2,6,6-pentamethyl-4-piperidylsebazat versetzt.

Das Produkt wird feuchtigkeitsdicht unter Stickstoffatmosphäre in einem Glasgefäß gelagert, bevor es gemäß der allgemeinen Vorschrift zu einer härtbaren Zusammensetzung weiterverarbeitet wird.

### Polymer VI (50 Gew.% γ-Trimethoxy-, 50 Gew.% α-Trimethoxy-methylsilylfunktionalisierung)

325 g (28 mmol) Polypropylenglykol 12000 (OHZ = 9,8) werden in einem 500 ml Dreihalskolben bei 80°C im Vakuum getrocknet. Anschließend werden unter Stickstoffatmosphäre bei 80°C 0,07 g Dibutylzinndilaurat, 7,2 g (34 mmol) 3-Isocyanatopropyltrimethoxysilan und 6,3 g (34 mmol) 1-Isocyanatomethyltrimethoxysilan (Geniosil XL 43) zugegeben und eine Stunde bei 80°C gerührt.

Die entstandene Prepolymermischung wird abgekühlt und mit 7,0 g Geniosil XL 63 und 5,3 g einer Mischung (Tinuvin 765) aus 70 Gew.-% Bis(1,2,2,6,6-pentamethyl-4-piperidyl)-sebacat und 30 Gew.-% Methyl-1,2,2,6,6-pentamethyl-4-piperidylsebazat versetzt.

Das Produkt wird feuchtigkeitsdicht unter Stickstoffatmosphäre in einem Glasgefäß gelagert, bevor es gemäß der allgemeinen Vorschrift zu einer härtbaren Zusammensetzung weiterverarbeitet wird.

### Polymer VII (75 Gew.% γ-Trimethoxy-, 25 Gew.% α-Trimethoxy-methylsilylfunktionalisierung)

330 g (18 mmol) Polypropylenglykol 12000 (OHZ = 9,8) werden in einem 500 ml Dreihalskolben bei 80°C im Vakuum getrocknet. Anschließend werden unter Stickstoffatmosphäre bei 80°C 0,07 g Dibutylzinndilaurat, 3,1 g (17 mmol) 3-Isocyanatopropylmethyldimethoxysilan und 10,8 g (51 mmol) 1-Isocyanatomethyltrimethoxysilan (Geniosil XL 43) zugegeben und eine Stunde bei 80°C gerührt.

Die entstandene Prepolymermischung wird abgekühlt und mit 7,0 g Geniosil XL 63 und 5,3 g einer Mischung (Tinuvin 765) aus 70 Gew.% Bis(1,2,2,6,6-pentamethyl-4-piperidyl)-sebacat und 30 Gew.-% Methyl-1,2,2,6,6-pentamethyl-4-piperidylsebazat versetzt.

Das Produkt wird feuchtigkeitsdicht unter Stickstoffatmosphäre in einem Glasgefäß gelagert, bevor es gemäß der allgemeinen Vorschrift zu einer härtbaren Zusammensetzung weiterverarbeitet wird.

### Prüfbedingungen Polymerfilme

Die Polymere wurden jeweils mit 1 Gew.% N-Aminoethyl-3-aminopropyltrimethoxysilan (Geniosil GF 91, Wacker Chemie AG) und 0,0 bzw. 0,2 Gew.% Katalysator versetzt. Von diesen Mischungen wurde die Hautbildungszeit (Skin over time / SOT) und die Zeit zur Ausbildung einer klebfreien Schicht (Tack free time / TFT) ermittelt.

Weiterhin wurden die oben genannten Mischungen mit einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Prüfstäbe) ausgestanzt und die mechanischen Daten (Module, Dehnung, Rückstellvermögen) nach DIN EN 27389 und DIN EN 28339 bestimmt. E-50 und E-100 bedeuten die Elastizitätsmodule bei einer Prüfkörperdehnung um 50 bzw. 100 %.

### Allgemeine Vorschrift zur Herstellung der erfindunosoemäßen härtbaren Zubereitungen:

Von den in den Beispielen hergestellten Polymermischungen werden anschließend "Montagekleber" bzw. "Sekundenkleber" hergestellt. Dazu werden Polymermischung, Weichmacher, Füllstoff(e), Katalysator und Silane in den in Tabellen 2 und 3 angegebenen Mengen (Gewichtsteile) in einem Speedmixer 30 s innig vermengt.

Dabei wurden u.a. verwendet: Kieselsäure mit einer BET-Oberflächen von 50± 15 m²/g (Aerosil OX 50), Dynasilan PTMO (Propyltrimethoxysilan), 3-Aminopropyltrimethoxysilan (Geniosil GF 96), ultrafeines, oberflächenbehandeltes, natürliches Calciumcarbonat mit einer hohen spezifischen Oberfläche (Omyabond 302)

### Ausweitung

Den Ergebnissen in Tabelle 1 kann entnommen werden, dass die Dehnbarkeit von Polymerfilme mit einer physikalischen Mischung verschieden funktionalisierter silanvernetzender Polymere (II, III, IV) besser ist als die solcher, die nur ein silanvernetzendes Polymer (I, V) enthalten.

Bei den erfindungsgemäßen Beispiele (II)-(IV) wurden deutlich kürzere Härtungszeiten beobachtet als bei der Vergleichsformulierung (Bsp. I). Besonders hohe Dehnbarkeiten weisen Polymerfilme gemäß Bsp. (II)-(IV) auf. Beispiel (IV) weist sowohl eine sehr hohe Dehnbarkeit, als auch eine hohe Bruch- und Reißfestigkeit und damit eine besonders vorteilhafte Kombination an Eigenschaften auf. Die Hautbildungszeit (SOT) ist bei Beispiel V für viele Anwendungen zu kurz

Aus den Ergebnissen der Tabelle 2 ist ersichtlich, dass die Polymerzusammensetzungen für die Herstellung von rasch abbindenden "Sekundenklebern" mit kurzer Hautbildungszeit und schneller Klebfreiheit geeignet sind.

In der Tabelle 3 sind Ergebnisse von Montagekleber Zubereitungen zusammengestellt. Auch hier weisen die erfindungsgemäß verwendeten Polymerzusammensetzungen (Beispiele 6 und 7) gegenüber dem Stand der Technik (Beispiel 5) ausgewogenere Eigenschaften auf: breites Haftungsspektrum bei Verklebungen verschiedener Substrate, rasche Hautbildungszeit, niedriger E-Modul.

**Tabelle 1 Polymerfilme**

| | Polymer I | Polymer II | Polymer III | Polymer IV | Polymer V |
|---|---|---|---|---|---|
| Viskosität (mPa.s/23°C /sp.7/50rpm) | ca. 30.000 | 33.120 | 32.800 | 38.320 | 38.800 |
| | | | | | |
| | | | | | |
| Film (Polymer + 1 %GF91 + 0,2%Kat) | | | | | |
| SOT | ca 15 min | 1 min | 1,5 - 2,0 min | 1 min | < 1 min |
| TFT | n.a. | 50 min | 40 min | 4 min | 2,5 min |
| Katalysator (0,2%) | DBTL | DBU | ohne Kat. | ohne Kat. | ohne Kat. |
| | | | | | |
| | | | | | |
| | | | | | |
| Bruch in N/mm² | 0,62 | 0,64 | 0,69 | 0,70 | 0,76 |
| Dehnung in % | 48,90% | 63,58% | 67,22% | 77,54% | 69,34% |
| E- 50 N/mm² | 0,66 | 0,56 | 0,58 | 0,54 | 0,63 |
| E- 100N/mm² | - | - | - | - | - |

**Tabelle 2 Sekundenkleber**

| *Beispiel* | 1 | 2 | 3 | 4 |
|---|---|---|---|---|
| Polymer VI | 59 | 70 | | |
| Polymer VII | | | 59 | 70 |
| | | | | |
| *Füllstoffe* | | | | |
| Aerosil OX 50 | 15 | 15,5 | 15 | 15,5 |
| *Additive* | | | | |
| Dynasilan PTMO | 15 | | 15 | |
| Geniosil GF 91 | 10 | 1 | 10 | 1 |
| Geniosil XL 10 | | 7,5 | | 7,5 |
| Geniosil GF 96 | | 5 | | 5 |
| | | | | |
| | | | | |
| | 99 | 99 | 99 | 99 |
| *Ergebnisse* | | | | |
| SOT | 5-10s | 15s | 15min | 10min |
| TFT in min | < 30 | < 30 | 45 | 60 |
| *Verklebungen [N*/*mm²]* | | | | |
| Holz-Holz | 6,21 | 5,68 | 7,24 | 6,69 |
| Holz-Aluminium | 5,67 | 4,89 | 6,15 | 5,33 |
| Holz-ABS | 0,85 | 0,51 | 1,35 | 0,90 |
| Aluminium-Aluminium | 3,55 | 2,34 | 2,05 | 2,75 |

**Tabelle 3 Montagekleber**

| Beispiel | 5 (Vergleich) | 6 | 7 |
|---|---|---|---|
| Polymer I | 27,40 | | |
| Polymer VI | | 27,40 | |
| Polymer VII | | | 27,40 |
| | | | |
| Mesamoll | 15,00 | 15,00 | 15,00 |
| | | | |
| Omyabond 302 | 55,00 | 55,00 | 55,00 |
| | | | |
| VTMO XL 10 | 1,50 | 1,50 | 1,50 |
| AMMO GF 96 | 1,00 | 1,00 | 1,00 |
| | | | |
| | | | |
| Silopren Kat. 162 (DBTL) | 0,10 | 0,10 | 0,10 |
| Summe | 100,00 | 100,00 | 100,00 |
| Ergebnisse | | | |
| | | | |
| SOT (Klimaraum) in min | 24 | sofort | 14 |
| TFT (Klimaraum) in h | < 24 | 3 | < 24 |
| Bruch in N/mm² | 3,10 | 2,69 | 2,69 |
| Dehnung in % | 138% | 144% | 104% |
| E- 50 N/mm² | 1,72 | 1,20 | 1,58 |
| E- 100 N/mm² | 2,75 | 2,11 | 2,61 |
| Festigkeiten nach 7d | | | |
| Holz-Holz | 5,04 | 3,22 | 5,0 |
| Holz-Aluminium | 2,49 | 2,13 | 3,48 |
| Holz-PMMA | 0,05-0,52 | 0,43 | 0,86 |
| Restklebrigkeit | keine | keine | keine |

## Patentansprüche

1. Härtbare Zusammensetzung, umfassend
a) ein Polymer P mit mindestens zwei Endgruppen der folgenden Formeln (I) und (II)
-Aₘ-K¹-SiXYZ (I),
-Aₘ-K²-SiXYZ (II),
und / oder
b) zwei Polymere P₁ und P₂, die ein Polymergerüst mit mindestens zwei Endgruppen (I) und/oder (II) aufweisen, wobei das Polymer P₁ Endgruppen der folgenden Formel (I)
-Aₘ-K¹-SiXYZ (I),
und das Polymer P₂ Endgruppen der folgenden Formel (II)
-Aₘ-K²-SiXYZ (II),
aufweist, wobei
A eine bivalente Bindegruppe bedeutet,
K¹, K² unabhängig voneinander für eine bivalente aliphatische Kohleäwasserstoffgruppe steht, die eine Hauptkette von 1 bis 6 Kohlenstoffatomen aufweist, wobei die Kohlenwasserstoffgruppen K¹, K² verschieden sind,
X, Y, Z unabhängig voneinander für eine Hydroxygruppe oder eine hydrolysierbare Gruppe stehen, und
m die Werte 0 oder 1 annimmt,
**dadurch gekennzeichnet, dass** die bivalente Bindegruppe A eine Amid-, Carbamat-, Harnstoff-, Imino-, Carboxy-, Carbonat-, Thio-, Mercapto- oder Sulfanatgruppe oder ein Sauerstoff- oder Stickstoffatom, insbesondere eine Urethangruppe bedeutet.

2. Zusammensetzung nach Anspruch 1, **dadurch gekennzeichnet, dass** K² eine um mindestens ein Kohlenstoffatom längere Hauptkette aufweist als K¹.

3. Zusammensetzung nach Anspruch 1 oder Anspruch 2, **dadurch gekennzeichnet, dass** K¹ für -CH₂- und / oder K² für -(CH₂)₃- steht.

4. Zusammensetzung nach einem der vorhergehenden Ansprüche, **dadurch gekennzeichnet, dass** X, Y und Z jeweils für eine hydrolysierbare Gruppe, ausgewählt aus -Cl, -O-C(=O)R¹, -OR¹ steht, wobei R¹ für einen Kohlenwasserstoffrest mit 1 bis 20 C-Atomen, insbesondere für-CH3 oder-C₂H₅ , steht.

5. Zusammensetzung nach einem der vorhergehenden Ansprüche, **dadurch gekennzeichnet, dass** X, Y und Z gleich sind.

6. Zusammensetzung nach einem der vorhergehenden Ansprüche, **dadurch gekennzeichnet, dass** die bivalente Bindegruppe A eine Urethangruppe bedeutet.

7. Zusammensetzung nach einem der vorhergehenden Ansprüche **dadurch gekennzeichnet, dass** die Polymere P, P₁, P₂ jeweils ein Polymergerüst aufweisen, das jeweils ausgewählt ist aus Alkydharzen, (Meth-)acrylaten und (Meth-)-acrylamiden sowie deren Salzen, Phenolharzen, Polyalkylenen, Polyamiden, Polycarbonaten, Polyolen, Polyethern, Polyestern, Polyurethanen, Vinylpolymeren, sowie Copolymeren bestehend aus mindestens zwei der vorgenannten Polymerklassen, insbesondere Polyethylenoxid und/oder Polypropylenoxid.

8. Zusammensetzung nach Anspruch 7, **dadurch gekennzeichnet, dass** das Molekulargewicht Mₙ des Polymergerüsts zwischen 3000 und 50.000 g/mol beträgt.

9. Verfahren zur Herstellung einer härtbaren Zusammensetzung, bei dem man
a) ein Polymer P' mit einem Polymergerüst mit mindestens zwei terminalen funktionellen Gruppen C und
b) zwei Verbindungen mit gegenüber C reaktiven funktionellen Gruppen D der allgemeinen Formeln (III) und (IV),
D-K¹-SiXYZ (III)
D-K²-SiXYZ (IV),
miteinander umsetzt,
wobei die Stoffe (III) und (IV) bei der Umsetzung gleichzeitig oder
zuerst Verbindung (IV) und danach Verbindung (III) in kurzem zeitlichem Abstand zu dem Polymer P' zugegeben werden,
wobei C und D aus einer der Gruppen
• -OH, -NHR², -NH₂, -Cl, -Br, -SH und
• -NCO, -NCS, -C(=O)Cl, -C(=O)OR³
ausgewählt sind, und
C und D nicht derselben Gruppe angehören,
K¹, K² unabhängig voneinander für eine bivalente aliphatische Kohlenwasserstoffgruppe steht, die eine Hauptkette von 1 bis 6 Kohlenstoffatomen aufweist, wobei die Kohlenwasserstoffgruppen K¹, K² verschieden sind,
X, Y, Z unabhängig voneinander für eine Hydroxygruppe oder eine hydrolysierbare Gruppe stehen,
R², R³ jeweils unabhängig voneinander für einen Kohlenwasserstoffrest mit 1 bis 20 C-Atomen stehen.

10. Verfahren zur Herstellung einer härtbaren Zusammensetzung, bei dem man zunächst
a) ein Polymer P' mit einem Polymergerüst mit mindestens zwei terminalen funktionellen Gruppen C mit der Verbindung (III)
D-K¹-SiXYZ (III),
getrennt hiervon
b) ein Polymer P" mit einem Polymergerüst mit mindestens zwei terminalen funktionellen Gruppen C mit der Verbindung (IV)
D-K²-SiXYZ (IV),
umsetzt, und
c) anschließend die Reaktionsprodukte aus Schritt a) und Schritt b) miteinander vermischt,
wobei C und D aus einer der Gruppen
• -OH, -NHR⁴, -NH₂, **-**Cl**,** -Br, -SH und
• -NCO, -NCS, -C(=O)Cl, -C(=O)OR⁵
ausgewählt sind, und
C und D nicht derselben Gruppe angehören,
K¹, K² unabhängig voneinander für eine bivalente aliphatische Kohlenwasserstoffgruppe steht, die eine Hauptkette von 1 bis 6 Kohlenstoffatomen aufweist, wobei die Kohlenwasserstoffgruppen K¹, K² verschieden sind,
X, Y unabhängig voneinander für eine Hydroxygruppe oder eine hydrolisierbare Gruppe stehen,
R⁴, R⁵ jeweils unabhängig voneinander für einen Kohlenwasserstoffrest mit 1 bis 20 C-Atomen stehen.

11. Verfahren nach Anspruch 9 oder Anspruch 10, **dadurch gekennzeichnet, dass** das Verfahren bei erhöhter Temperatur, insbesondere in einem Bereich von 60 bis 100 °C durchgeführt wird.

12. Verfahren nach einem der Ansprüche 9 bis 11, **dadurch gekennzeichnet, dass** das Verhältnis der funktionellen Gruppen D zu funktionellen Gruppen C zwischen 3:1 bis 1:1, insbesondere zwischen 2:1 und 1,3:1 beträgt.

13. Zusammensetzung, herstellbar durch ein Verfahren nach einem der Ansprüche 9 bis 12.

14. Zubereitung, enthaltend eine Zusammensetzung nach einem der Ansprüche 1 bis 8 oder Anspruch 13.

15. Verwendung einer Zusammensetzung nach einem der Ansprüche 1 bis 8 oder Anspruch 13, oder einer Zubereitung nach Anspruch 14 als Kleb- oder Dichtstoff.

## Claims

1. A curable composition, comprising
a) A polymer P having at least two end groups of the following Formulae (I) and (II)
-Aₘ-K¹-SiXYZ (I)
-Aₘ-K²-SiXYZ (II)
and/or
b) two polymers P₁ and P₂, which possess a polymer structure having at least two end groups (I) and (II), wherein the polymer P₁ possesses end groups of the following Formula (I)
-Aₘ-K¹-SiXYZ (I)
and the polymer P₂ possesses end groups of the following Formula (II)
-Aₘ-K²-SiXYZ (II)
wherein
A means a divalent binding group,
K¹, K² independently of one another stands for a divalent aliphatic hydrocarbon group that possesses a main chain of 1 to 6 carbon atoms, wherein the hydrocarbon groups K¹, K² are different,
X, Y, Z independently of one another stand for a hydroxyl group or a hydrolysable group, and
m assumes the value 0 or 1,
**characterised in that** the divalent binding group A signifies an amide, carbamate, urea, imino, carboxy, carbonate, thio, mercapto or sulfanate group or an oxygen or nitrogen atom, especially a urethane group.

2. The composition according to claim 1, **characterised in that** K² possesses a main chain that is at least one carbon atom longer than that of K¹.

3. The composition according to claim 1 or claim 2, **characterised in that** K¹ stands for -CH₂- and/or K² stands for -(CH₂)₃-.

4. The composition according to one of the previous claims, **characterised in that** X, Y and Z each stand for a hydrolysable group selected from -Cl, -O-C(=O)R¹, -OR¹, wherein R¹ stands for a hydrocarbon group with 1 to 20 atoms, especially for -CH₃ or -C₂H₅.

5. The composition according to one of the previous claims, **characterised in that** X, Y and Z are identical.

6. The composition according to one of the previous claims, **characterised in that** the divalent binding group A signifies a urethane group.

7. The composition according to one of the previous claims, **characterised in that** the polymers P, P₁, P₂ each possess a polymer backbone that is selected from alkyd resins, (meth-)acrylates and (meth-)acrylamides as well as their salts, phenolic resins, polyalkylenes, polyamides, polycarbonates, polyols, polyethers, polyesters, polyurethanes, vinyl polymers, as well as copolymers consisting of at least two of the abovementioned polymer classes, especially polyethylene oxide and/or polypropylene oxide.

8. The composition according to claim 7, **characterised in that** the molecular weight Mn of the polymer backbone is between 3000 and 50 000 g/mol.

9. Process for manufacturing a curable composition in which
a) a polymer P' having a polymer backbone with at least two terminal functional groups C and
b) two compounds having functional groups D of the general Formulae (III) and (IV) that are reactive towards C,
-D-K¹-SiXYZ (III)
-D-K²-SiXYZ (IV)
are reacted with one another,
wherein for the reaction the substances (III) and (IV) are added simultaneously, or in the order compound (IV) and shortly afterwards compound (III), to the polymer P',
wherein C and D are selected from one of the groups
• -OH, -NHR², -NH₂, -Cl, -Br, -SH and
• NCO, -NCS, -C(=O)Cl, -C(=O)OR³
and
C and D do not belong to the same group,
K¹, K² independently of one another stands for a divalent aliphatic hydrocarbon group that possesses a main chain of 1 to 6 carbon atoms, wherein the hydrocarbon groups K¹, K² are different,
X, Y, Z independently of one another stand for a hydroxyl group or a hydrolysable group,
R², R³ each independently of one another stand for a hydrocarbon group containing 1 to 20 carbon atoms.

10. Process for manufacturing a curable composition in which firstly
a) a polymer P' having a polymer backbone with at least two terminal functional groups C is reacted with the compound (III)
-D-K¹-SiXYZ (III)
separately therefrom
b) a polymer P" with a polymer backbone having at least two terminal functional groups C is reacted with the compound (IV)
-D-K²-SiXYZ (IV)
and
c) the reaction products from step a) and step b) are subsequently blended together,
wherein C and D are selected from one of the groups
• -OH, -NHR⁴, -NH₂, -Cl, -Br, -SH and
• NCO, -NCS, -C(=O)Cl, -C(=O)OR⁵
and
C and D do not belong to the same group,
K¹, K² independently of one another stands for a divalent aliphatic hydrocarbon group that possesses a main chain of 1 to 6 carbon atoms, wherein the hydrocarbon groups K¹, K² are different,
X, Y independently of one another stand for a hydroxyl group or a hydrolysable group,
R⁴, R⁵ each independently of one another stand for a hydrocarbon group containing 1 to 20 carbon atoms.

11. The process according to claim 9 or claim 10, **characterised in that** the process is carried out at elevated temperature, especially in a range from 60 to 100 °C.

12. The process according to one of claims 9 to 11, **characterised in that** the ratio of the functional groups D to the functional groups C is between 3: 1 to 1:1, especially between 2:1 and 1.3:1.

13. The composition that can be manufactured by a process according to claim 9 to 12.

14. A preparation comprising a composition according to claim 1 to 8 or claim 13.

15. The use of a composition according to one of claims 1 to 8 or claim 13, or a preparation according to claim 14 as an adhesive or sealant.

## Revendications

1. Composition durcissable comprenant
a) un polymère P comprenant au moins deux groupes terminaux répondant aux formules suivantes (I) et (II)
-Aₘ-K¹-SiXYZ (I)
-Aₘ-K²-SiXYZ (II)
et/ou
b) deux polymères P₁ et P₂ qui présentent un squelette polymère comprenant au moins deux groupes terminaux (I) et/ou (II), le polymère P₁ présentant des groupes terminaux répondant à la formule suivante (I)
-Aₘ-K¹-SiXYZ (I)
et le polymère P₂ présentant des groupes terminaux répondant à la formule suivante (II)
-Aₘ-K²-SiXYZ (II)
formules dans lesquelles :
A représente un groupe de liaison divalent ;
K¹, K² représentent, indépendamment l'un de l'autre, un groupe d'hydrocarbure aliphatique divalent qui présente une chaîne principale contenant de 1 à 6 atomes de carbone, les groupes d'hydrocarbures K¹, K² étant différents,
X, Y, Z représentent, indépendamment l'un de l'autre, un groupe hydroxyle ou un groupe hydrolysable ; et
m prend la valeur 0 ou 1,
**caractérisée en ce que** le groupe de liaison divalent A représente un groupe amide, un groupe carbamate, un groupe urée, un groupe imino, un groupe carboxyle, un groupe carbonate, un groupe thio, un groupe mercapto ou un groupe sulfanate ou bien un atome d'oxygène ou un atome d'azote, en particulier un groupe uréthane.

2. Composition selon la revendication 1, **caractérisée en ce que** K² présente une chaîne principale plus longue que celle de K¹ à concurrence d'au moins un atome de carbone.

3. Composition selon la revendication 1 ou 2, **caractérisée en ce que** K¹ représente un groupe -CH₂- et/ou K² représente un groupe -(CH₂)₃-.

4. Composition selon l'une quelconque des revendications précédentes, **caractérisée en ce que** X, Y et Z représentent respectivement un groupe hydrolysable choisi parmi un atome de chlore, un groupe -O-C(=O)R¹, un groupe -OR¹, où R¹ représente un radical d'hydrocarbure contenant de 1 à 20 atomes de carbone, en particulier un groupe -CH₃ ou un groupe -C₂H₅.

5. Composition selon l'une quelconque des revendications précédentes, **caractérisée en ce que** X, Y et Z sont identiques.

6. Composition selon l'une quelconque des revendications précédentes, **caractérisée en ce que** le groupe de liaison divalent A représente un groupe uréthane.

7. Composition selon l'une quelconque des revendications précédentes, **caractérisée en ce que** les polymères P, P₁, P₂ présentent respectivement un squelette polymère qui est choisi respectivement parmi des résines alkydes, des (méth)acrylates et des (méth)acrylamides ainsi que leurs sels, des résines phénoliques, des polyalkylènes, des polyamides, des polycarbonates, des polyols, des polyéthers, des polyesters, des polyuréthanes, des polymères vinyliques, ainsi que des copolymères constitués par au moins deux des classes polymères mentionnées ci-dessus, en particulier l'oxyde de polyéthylène et/ou l'oxyde de polypropylène.

8. Composition selon la revendication 7, **caractérisé en ce que** le poids moléculaire Mₙ du squelette polymère se situe entre 3.000 et 50.000 g/mol.

9. Procédé pour la préparation d'une composition durcissable, dans lequel on fait réagir réciproquement
a) un polymère P' comprenant un squelette polymère comprenant au moins deux groupes fonctionnels terminaux C et
b) deux composés comprenant des groupes fonctionnels D, répondant aux formules générales (III) et (IV), aptes à réagir vis-à-vis de C,
-D-K¹-SiXYZ (III)
-D-K²-SiXYZ (IV)
les substances (III) et (IV) étant ajoutées de manière simultanée à la mise en réaction, ou bien en premier lieu le composé (IV) et ensuite le composé (III) à une courte distance dans le temps, au polymère P',
C et D étant choisis parmi un des groupes :
• -OH, -NHR², -NH₂, -Cl, -Br, -SH and
• NCO, -NCS, -C(=O)Cl, -C(=O)OR³
et
C et D ne faisant pas partie du même groupe ;
K¹, K² représentent, indépendamment l'un de l'autre, un groupe d'hydrocarbure aliphatique divalent qui présente une chaîne principale contenant de 1 à 6 atomes de carbone, les groupes d'hydrocarbures K¹, K² étant différents,
X, Y, Z représentent, indépendamment l'un de l'autre, un groupe hydroxyle ou un groupe hydrolysable ;
R², R³ représentent respectivement, indépendamment l'un de l'autre, un radical d'hydrocarbure contenant de 1 à 20 atomes de carbone.

10. Procédé pour la préparation d'une composition durcissable, dans lequel on fait d'abord réagir
a) un polymère P' comprenant un squelette polymère comprenant au moins deux groupes fonctionnels terminaux C, avec le composé (III)
-D-K¹-SiXYZ (III)
de manière séparée
b) un polymère P" comprenant un squelette polymère comprenant au moins deux groupes fonctionnels terminaux C, avec le composé (IV),
-D-K²-SiXYZ (IV)
et
c) on mélange ensuite l'un avec l'autre les produits réactionnels de l'étape a) et de l'étape b),
C et D étant choisis parmi un des groupes :
• -OH, -NHR⁴, -NH₂, -CI, -Br, -SH and
• NCO, -NCS, -C(=O)Cl, -C(=O)OR⁵
et
C et D ne faisant pas partie du même groupe ;
K¹, K² représentent, indépendamment l'un de l'autre, un groupe d'hydrocarbure aliphatique divalent qui présente une chaîne principale contenant de 1 à 6 atomes de carbone, les groupes d'hydrocarbures K¹, K² étant différents,
X, Y représentent, indépendamment l'un de l'autre, un groupe hydroxyle ou un groupe hydrolysable ;
R⁴, R⁵ représentent respectivement, indépendamment l'un de l'autre, un radical d'hydrocarbure contenant de 1 à 20 atomes de carbone.

11. Procédé selon la revendication 9 ou 10, **caractérisé en ce que** le procédé est mis en oeuvre à température élevée, en particulier dans la plage de 60 à 100 °C.

12. Procédé selon l'une quelconque des revendications 9 à 11, **caractérisé en ce que** le rapport des groupes fonctionnels D aux groupes fonctionnels C se situe entre 3:1 et 1:1, en particulier entre 2:1 et 1,3:1.

13. Composition, que l'on peut préparer via un procédé selon l'une quelconque des revendications 9 à 12.

14. Préparation contenant une composition selon l'une quelconque des revendications 1 à 8 ou selon la revendication 13.

15. Utilisation d'une composition selon l'une quelconque des revendications 1 à 8 ou selon la revendication 13, ou d'une préparation selon la revendication 14, à titre d'adhésif ou de substance d'étanchéité.
